# EUROPÄISCHE PATENTSCHRIFT

(11) **EP 0 836 567 B1**
(45) Veröffentlichungstag und Bekanntmachung des Hinweises auf die Patenterteilung: **10.07.2002**
(21) Anmeldenummer: 97922825.1
(22) Anmeldetag: 09.04.1997
(51) Int. Cl.: B60T 13/66, B60T 8/00

(54) **VERFAHREN UND VORRICHTUNG ZUR STEUERUNG DER BREMSKRAFT AN WENIGSTENS EINEM RAD EINES FAHRZEUGES**
PROCESS AND DEVICE FOR CONTROLLING THE BRAKING FORCE ON AT LEAST ONE WHEEL OF A VEHICLE
PROCEDE ET DISPOSITIF POUR LA REGULATION DE LA FORCE DE FREINAGE SUR AU MOINS UNE ROUE D'UN VEHICULE

(30) Priorität: 18.04.1996 DE 19615294
(43) Veröffentlichungstag der Anmeldung: 22.04.1998
(73) Patentinhaber: ROBERT BOSCH GMBH, 70442 Stuttgart (DE)
(72) Erfinder: WÜRTH, Gebhard, D-74429 Sulzbach-Laufen (DE); MÜLLER, Elmar, D-71706 Markgröningen (DE); LEIBELING, Frank, D-71696 Möglingen (DE); SCHÜTZ, Dieter, D-71665 Vaihingen (DE)
(86) Internationale Anmeldenummer: DE9700711
(87) Internationale Veröffentlichungsnummer: WO9739930

(56) Entgegenhaltungen:
- DE-A- 3 423 063
- DE-A- 3 511 579
- DE-A- 4 037 468
- ATZ AUTOMOBILTECHNISCHE ZEITSCHRIFT, Bd. 97, Nr. 1, 1.Januar 1995, Seiten 8/9, 12-19, XP000486415 LEFFLER H ET AL: "BREMSANLAGE UND SCHLUPF-REGELSYTEME DER NEUEN 7ER-REIHE VON BMW BRAKE AND WHEEL SLIP CONTROL SYSTEMS OF THE NEW 7 SERIES BMW"
- ATZ AUTOMOBILTECHNISCHE ZEITSCHRIFT, Bd. 98, Nr. 4, 1.April 1996, Seiten 188-191, 194 - 196, 198, XP000582531 KURZ G ET AL: "BREMSANLAGE UND SCHLUPFREGELUNGS-SYSTEME DER NEUEN BAUREIHE 5 BMW"
- ATZ AUTOMOBILTECHNISCHE ZEITSCHRIFT, Bd. 96, Nr. 11, 1.November 1994, Seiten 674-678, 683 - 689, XP000478694 ZANTEN VAN A ET AL: "FDR - DIE FAHRDYNAMIK-REGELUNG VON BOSCH"

## Beschreibung

### Stand der Technik

Die Erfindung betrifft ein Verfahren und eine Vorrichtung zur Steuerung der Bremskraft an wenigstens einem Rad eines Fahrzeuges.

Verfahren und Vorrichtungen zur Steuerung der Bremskraft an wenigstens einem Rad eines Fahrzeuges sind aus dem Stand der Technik in vielerlei Modifikationen bekannt. Bei diesen Verfahren und Vorrichtungen werden im allgemeinen aus Meß- und Schätzgrößen Sollgrößen bestimmt. Im wesentlichen handelt es sich bei den Sollgrößen um die Fahrzeugbewegung beschreibende und/oder beeinflussende Größen, wie z.B. der Radschlupf und/oder die Gierwinkelgeschwindigkeit. Ausgehend von diesen Sollgrößen werden an den Rädern des Fahrzeuges Bremsmomente eingestellt. Bei einigen dieser Verfahren und Vorrichtungen kann die Einstellung der Bremsmomente radindividuell erfolgen.

Um ein unterschiedliches Regelverhalten, welches beispielsweise durch das Temperaturverhalten der in der Vorrichtung angeordneten Komponenten, bzw. durch hydraulische und/oder geometrische Toleranzen verursacht wird, bei diesen Vorrichtungen und Verfahren zu kompensieren, wird bei einigen dieser Verfahren und Vorrichtungen zeitlich vor dem eigentlichen, für die Einstellung des erforderlichen Bremsmomentes notwendigen Druckaufbau, ein geringer Bremsdruck in Form eines zeitlich begrenzten Füllpulses eingespeist. Alternativ hierzu oder ergänzend hierzu wird bei einigen Vorrichtungen und Verfahren eine Korrektur der Ventilansteuerzeiten vorgenommen.

Aus der DE-OS 34 23 063 ist ein Antriebsschlupfregelsystem für Fahrzeuge bekannt, bei dem bei Auftreten einer Durchdrehneigung an einem Rad dieses gebremst wird. Um hierbei ein schnelles Ansprechen der Bremse beim Erkennen der Durchdrehneigung zu erzielen, wird die Bremse bereits im Vorfeld der Durchdrehneigung durch Einsteuern eines geringen Bremsdruckes gerade angelegt. Die Einspeisung des geringen Bremsdruckes wird hierbei in Abhängigkeit der Änderung der Drosselklappenstellung, in Abhängigkeit der Fahrzeuggeschwindigkeit, bzw. in Abhängigkeit von Schlupfschwellen, die unterhalb der Ansprechschwellen für die eigentliche Antriebsschlupfregelung liegen, ausgelöst. Die Einspeisung des geringen Bremsdruckes geschieht durch einen Füllpuls konstanter Zeitdauer. Das heißt bei Vorliegen der Erfordernis der Einspeisung des geringen Bremsdruckes wird dieser für eine fest vorgegebene Zeit in die entsprechenden Radbremszylinder eingespeist. Durch den vor dem eigentlichen Bremseingriff eingespeisten geringen Bremsdruck wird die Reaktionszeit, die vom Feststellen der Durchdrehneigung bis zum Bremsbeginn vergeht, verkürzt.

Da der Füllpuls für alle Räder des Fahrzeuges eine fest vorgegebene Zeitdauer hat, werden z.B. Toleranzen, die für die einzelnen Räder verschieden sein können, nicht berücksichtigt. Dies kann trotz Einspeisung des geringen Bremsdruckes zu unterschiedlichem Regelverhalten an den einzelnen Rädern des Fahrzeuges führen.

Die unter dem Aktenzeichen 196 04 126.0 beim Deutschen Patentamt eingereichte Patentanmeldung beschreibt ein Verfahren bzw. eine Vorrichtung zur Steuerung der Bremsanlage eines Fahrzeuges. Bei diesem Verfahren bzw. bei dieser Vorrichtung wird der Aufbau bzw. der Abbau des Bremsdruckes in den Radbremszylindern durch eine pulsförmige Ansteuerung der zum jeweiligen Radbremszylinder gehörenden Einlaß- bzw. Auslaßventile realisiert. Als Ansteuersignal wird hierfür ein Pulssignal verwendet, welches wenigstens in einem Parameter veränderbar ist. Als mögliche Parameter kommen hierbei die Pulslänge, die Pulspausenzeit, die Pulshöhe und/oder die Frequenz des Pulssignales in Betracht. Um eine gleichbleibende Druckaufbaudynamik in allen Betriebssituationen zu gewährleisten, wird der jeweils verwendete Parameter in Abhängigkeit einer die Druckänderungsdynamik beeinflussenden Größe korrigiert. Als entsprechende Größe kommen hierbei beispielsweise die Temperatur des Hydrauliköls bzw. der Umgebungstemperatur und/oder die Versorgungsspannung des Pumpenmotors in Betracht.

Die Aufgabe der vorliegenden Erfindung besteht darin, die Kompensation unterschiedlichen Regelverhaltens innerhalb der Vorrichtung bzw. innerhalb des Verfahrens zur Steuerung der Bremskraft an wenigstens einem Rad eines Fahrzeuges zu verbessern.

### Vorteile der Erfindung

Der Vorteil der Erfindung gegenüber dem eingangs genannten Stand der Technik ist folgender: Die Zeitdauer, während der eine Betätigung der dem entsprechenden Rad zugeordneten Aktuatoren vor einem absehbaren fahrerunabhängigen Bremseneingriff vorgenommen wird, und während der beispielsweise bei einer hydraulischen Bremsanlage ein geringer Bremsdruck in den entsprechenden Radbremszylinder eingespeist und somit eine Bremskraft aufgebracht wird, ist bei der erfindungsgemäßen Vorrichtung bzw. bei dem erfindungsgemäßen Verfahren nicht fest vorgegeben, sondern variabel. Da diese Zeitdauer für jedes einzelne Rad des Fahrzeuges individuell variiert wird, befinden sich die Radbremsen sämtlicher Räder vor dem eigentlich erforderlichen, absehbaren Bremseneingriff im selben Zustand. Dadurch wird das für die einzelnen Radbremsen vorhandene unterschiedliche mechanische Spiel, welches beispielsweise durch die mechanischen Toleranzen der verwendeten Komponenten zustande kommt, kompensiert. Dies führt dazu, daß bei einem erforderlichen Bremsenseingriff sämtliche Radbremsen das gleiche Regelverhalten zeigen.

Ferner erreicht man durch die erfindungsgemäße Vorrichtung bzw. durch das erfindungsgemäße Verfahren eine genauere Einstellung der Bremskraft, da der beim erforderlichen Bremseneingriff eingespeiste Bremsdruck unverzüglich zu einem Aufbau eines Bremsmomentes führt.

Weitere Vorteile ergeben sich aus der nachfolgenden Beschreibung des Ausführungsbeispiels und seiner Varianten bzw. aus den abhängigen Patentansprüchen.

### Zeichnung

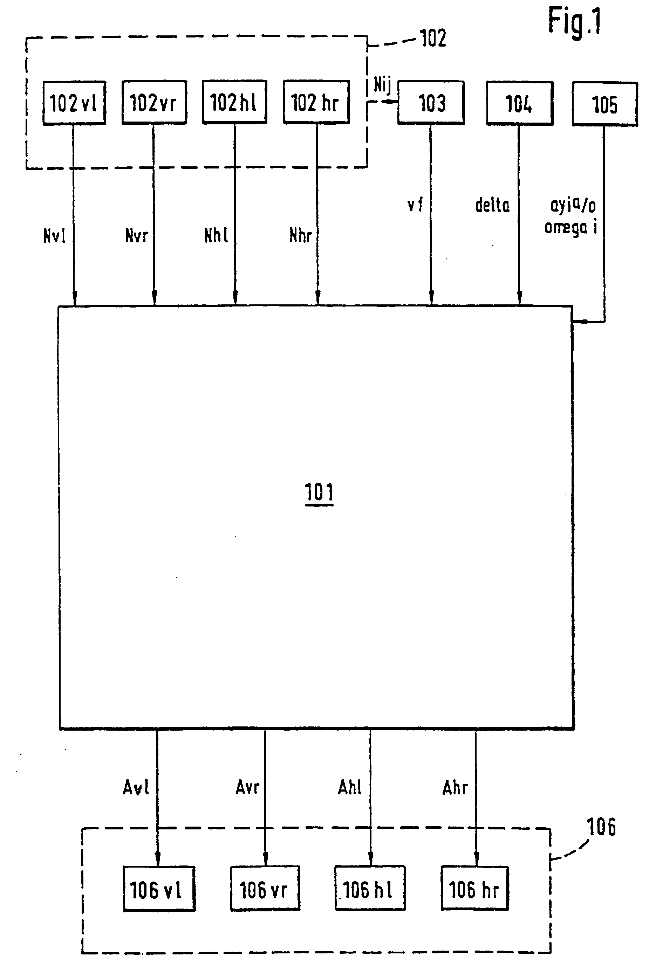

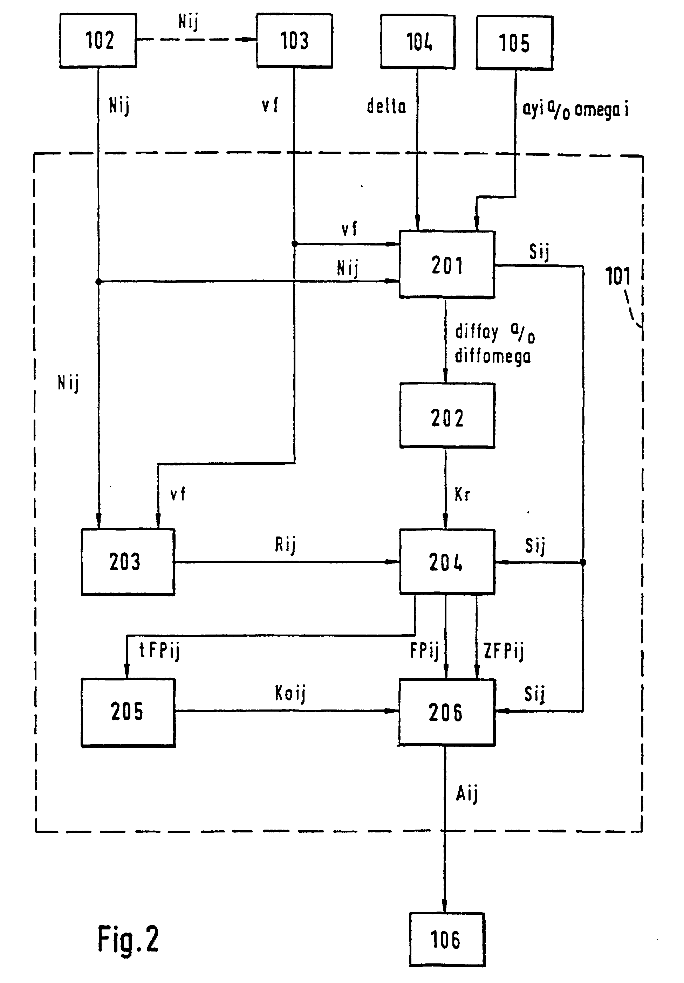

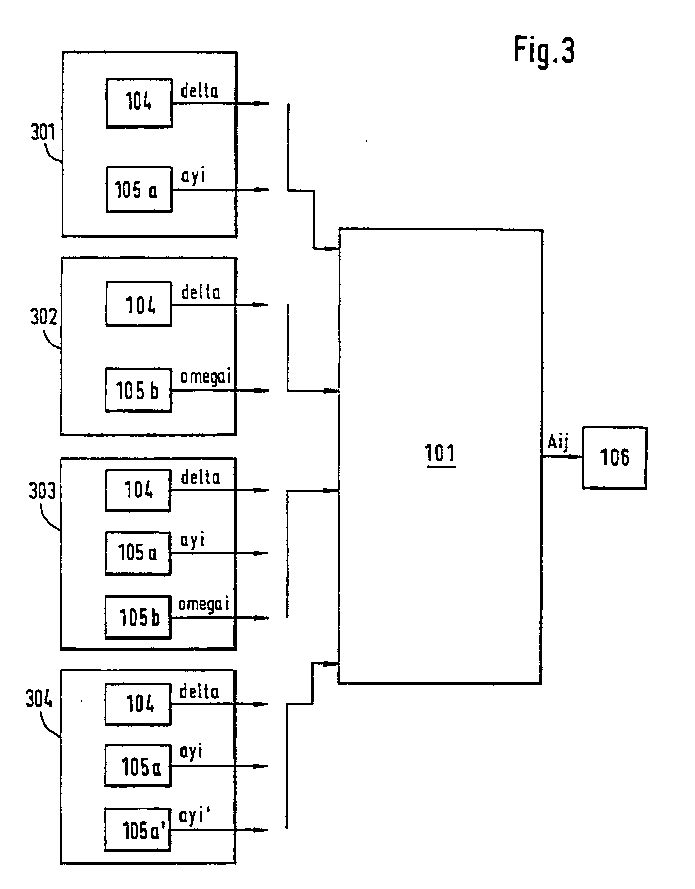

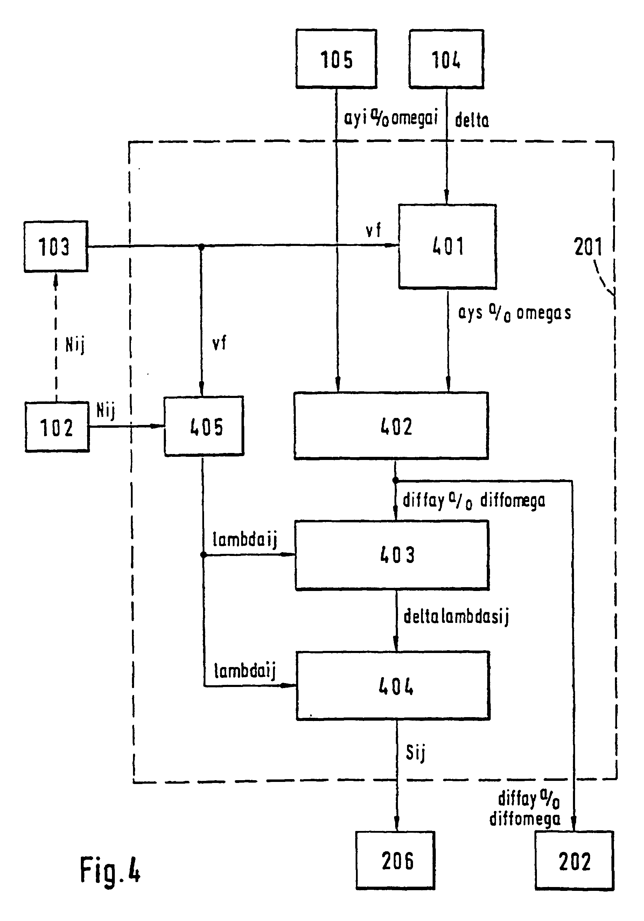

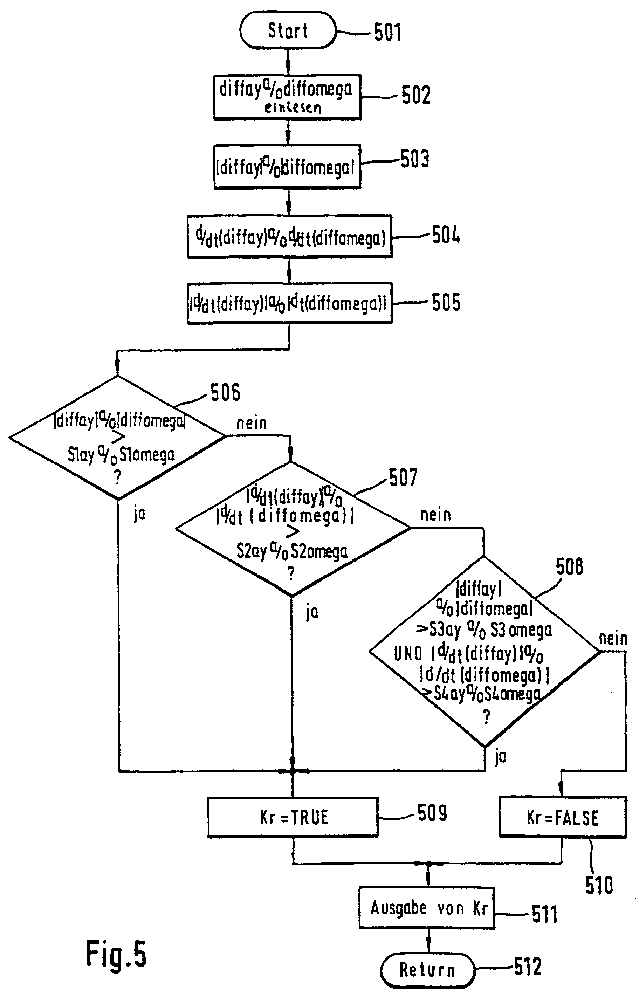

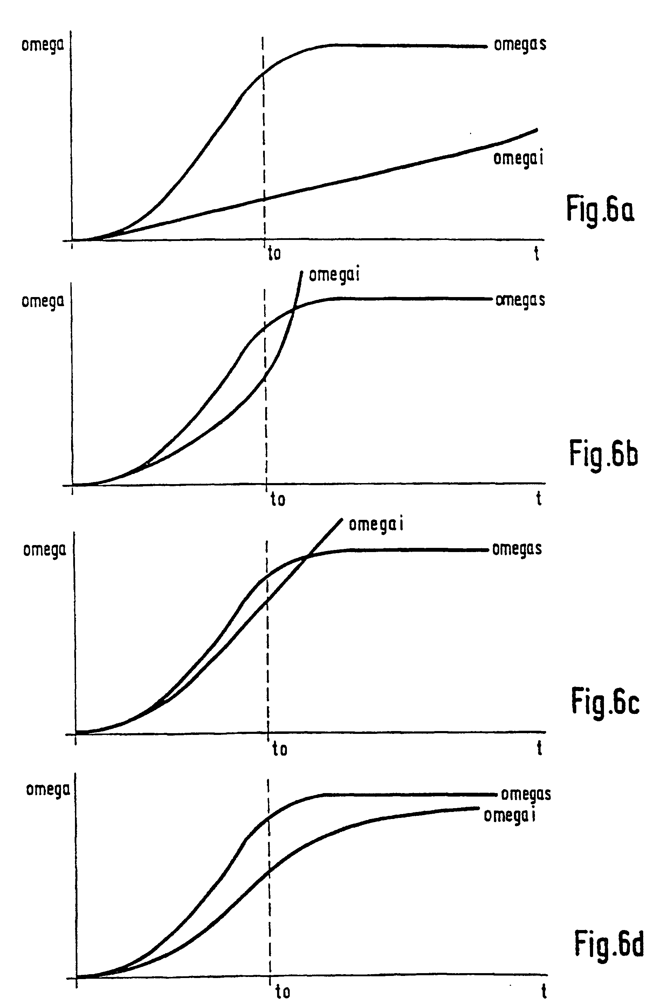

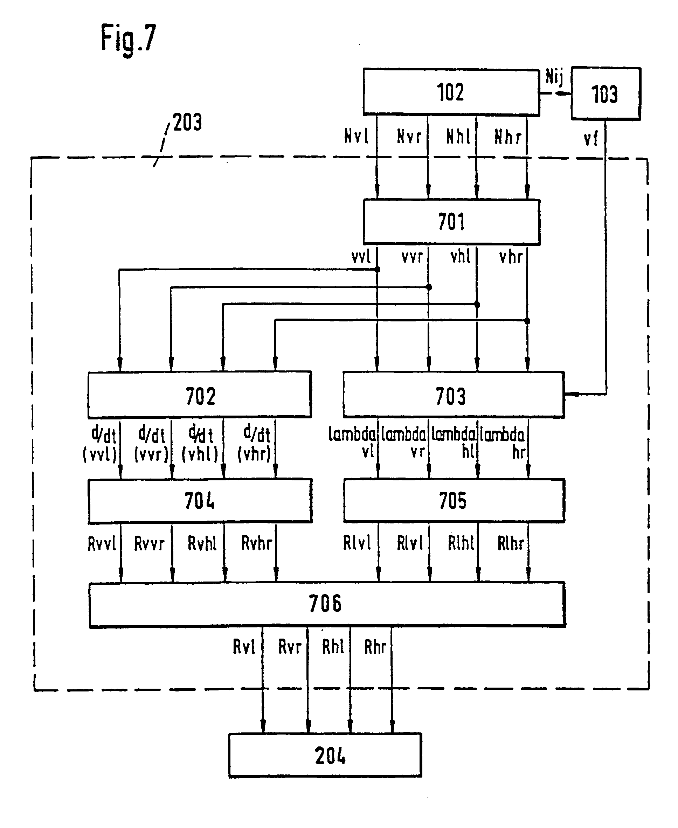

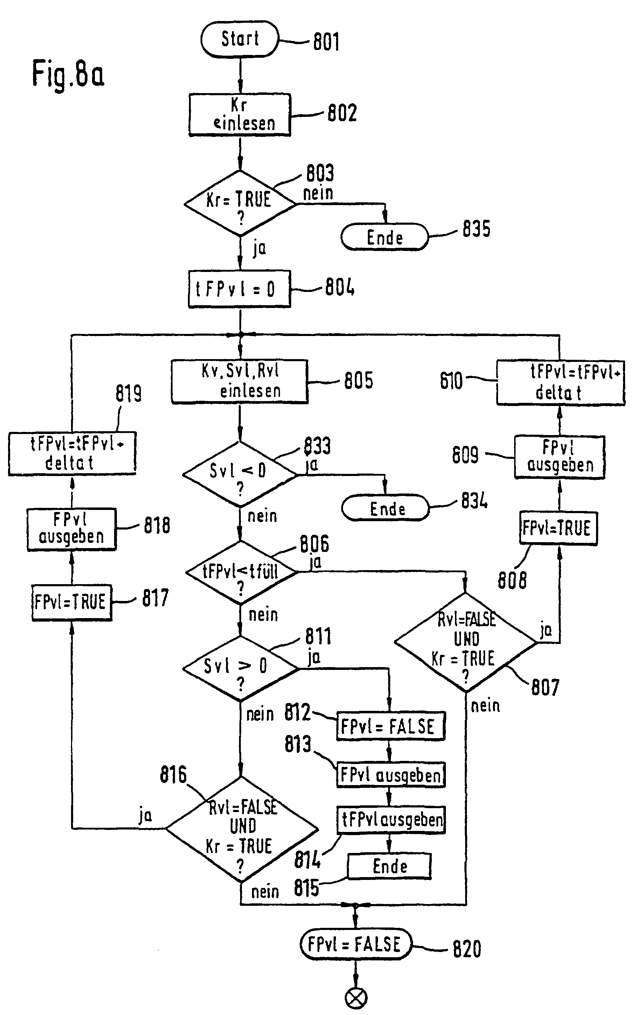

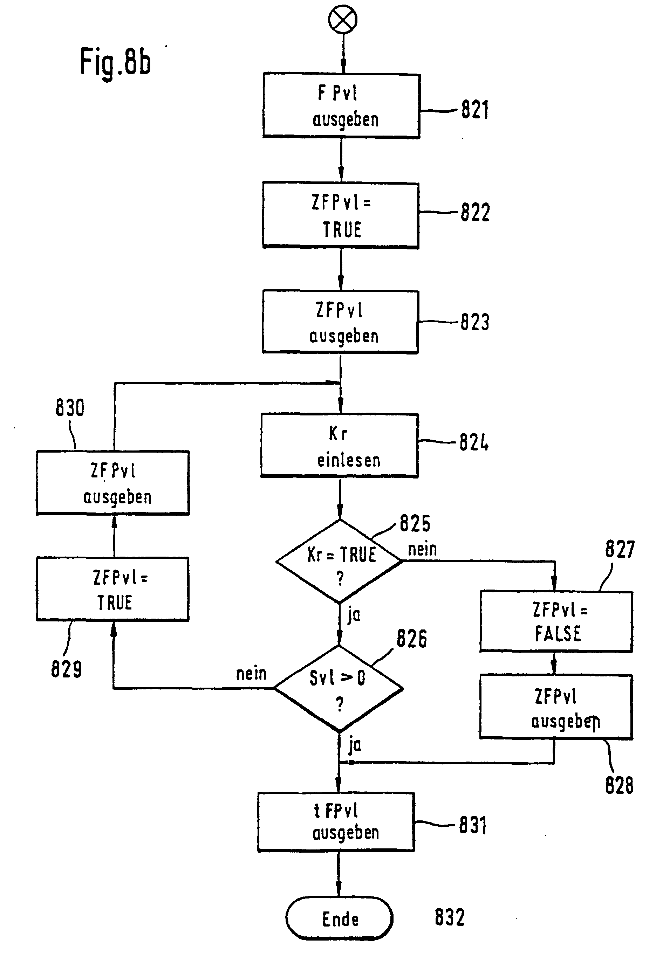

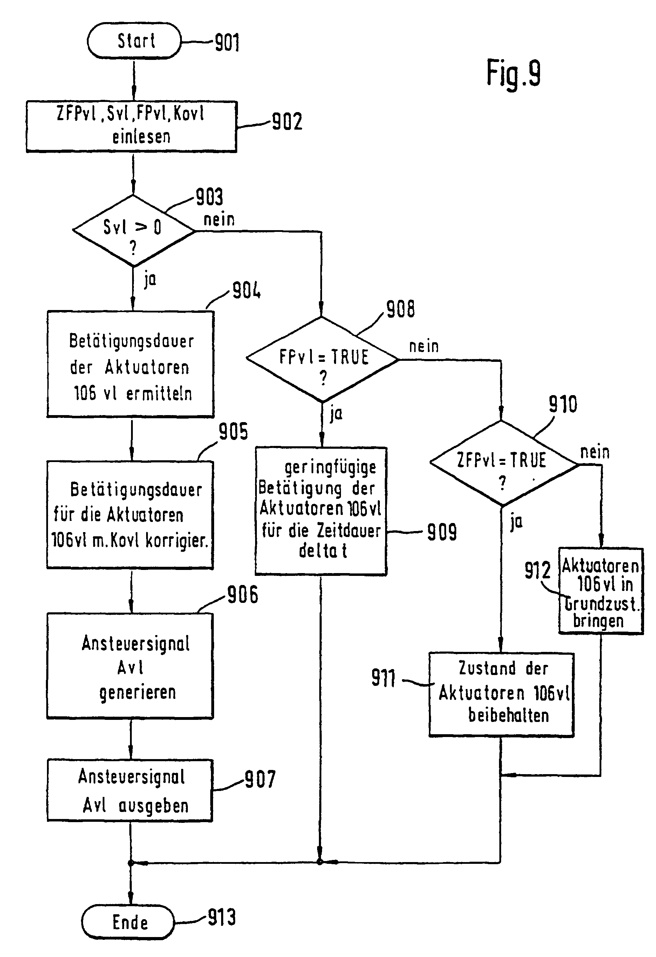

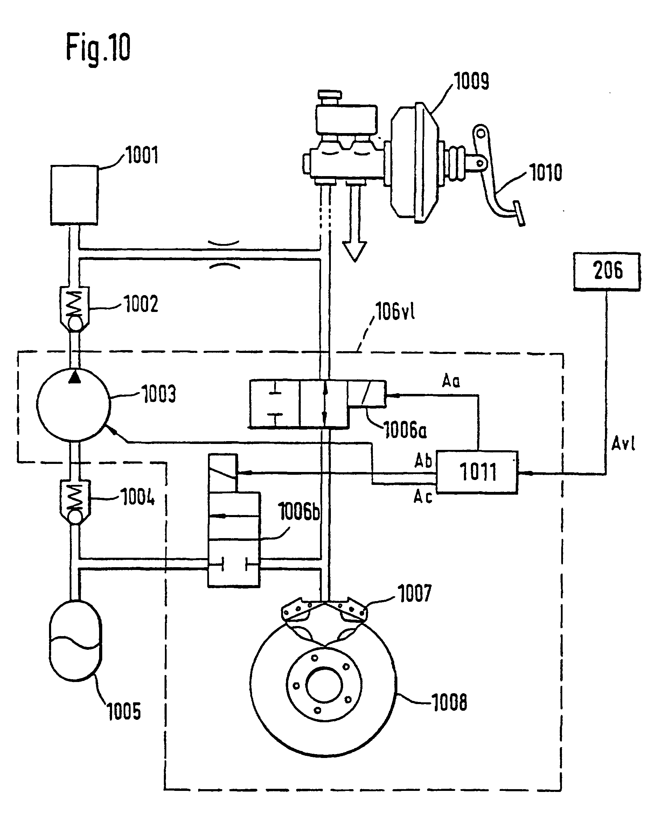

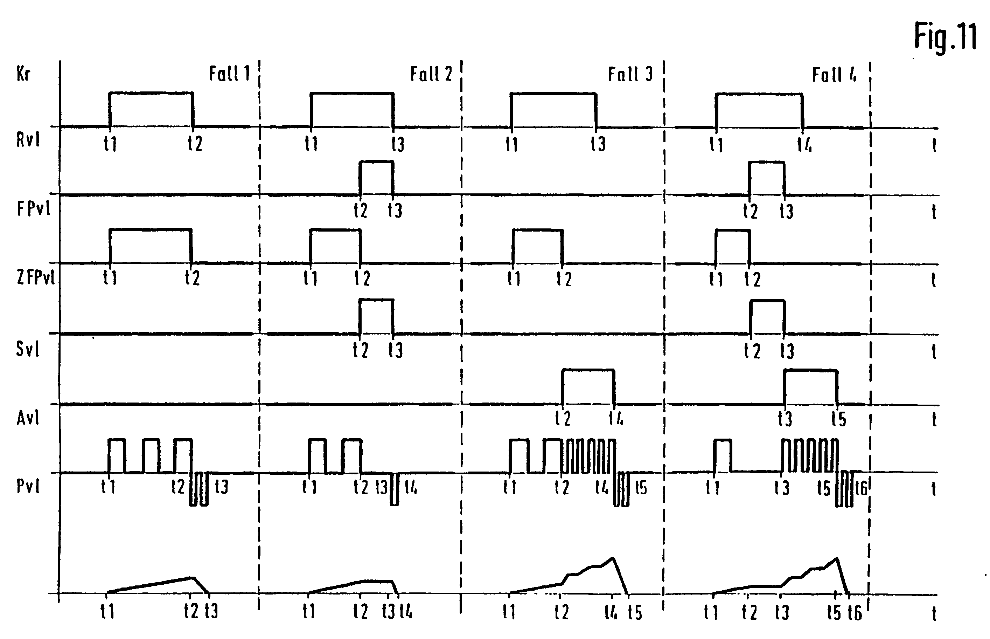

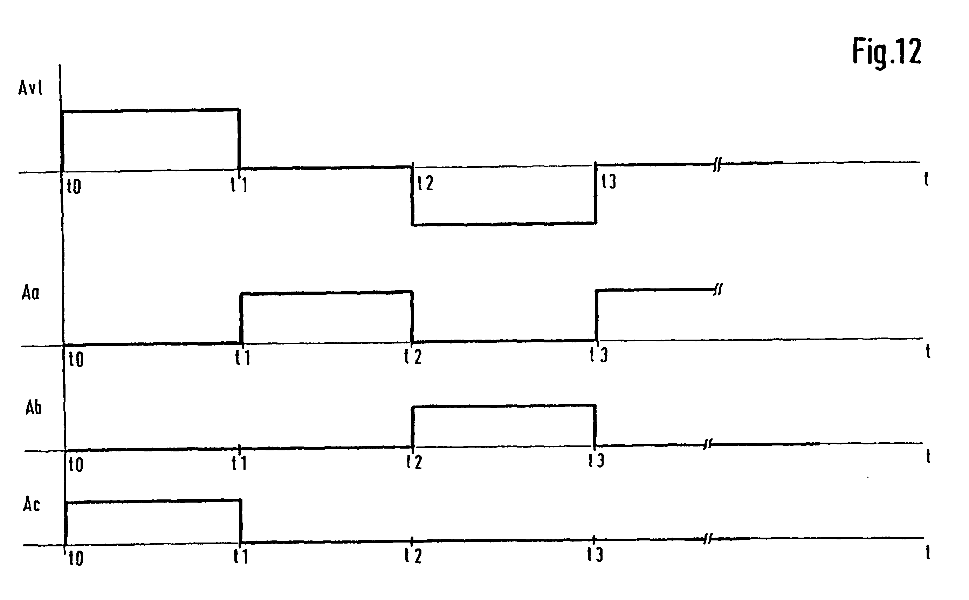

Die Zeichnung besteht aus den Figuren 1 bis 12. Figur 1 zeigt in einem Übersichtsblockschaltbild eine Steuereinrichtung in welcher die erfindungsgemäße Idee realisiert ist. Figur 2 zeigt in einem weiteren Übersichtsblockschaltbild den prinzipiellen Aufbau des Steuergerätes. In Figur 3 sind verschiedene Sensorkonfigurationen dargestellt, mit deren Hilfe verschiedene Fahrdynamikgrößen bestimmt werden können, die zur Beschreibung des die Fahrzeugbewegung beschreibenden und/oder beeinflussenden Kriteriums benötigt werden. Figur 4 zeigt in einem Übersichtsblockschaltbild den prinzipiellen Aufbau des im Steuergerät enthaltenen Reglers. Figur 5 zeigt mit Hilfe eines Flußdiagramms die Funktionsweise des Mittels, mit dessen Hilfe das die Fahrzeugbewegung beschreibende und/oder beeinflussende Kriterium ermittelt wird. In den Figuren 6a, 6b, 6c sowie 6d sind einige Funktionsverläufe dargestellt, die zur Erläuterung des in Figur 5 gezeigten Flußdiagramms dienen. Mit Hilfe des in Figur 7 enthaltenen Übersichtsblockschaltbild wird die Funktion des Mittels zur Bestimmung der die Raddynamik beschreibenden Größe beschrieben. Die Figuren 8a bzw. 8b zeigen ein Flußdiagramm, mit dem die Funktionsweise des Mittels erklärt wird, mit welchen detektiert wird, ob bzw. wie lange die geringfügige Betätigung der Aktuatoren eines entsprechenden Rades und somit, beispielsweise bei einer hydraulischen Bremsanlage, die Einspeisung eines geringen Bremsdruckes erforderlich ist. Das in Figur 9 dargestellte Flußdiagramm beschreibt die Funktionsweise der Ansteuereinheit für die Aktuatoren der Bremseinlage. In Figur 10 sind beispielhaft für ein Fahrzeugrad (linkes Vorderrad) die Anordnung der Aktuatoren bzw. Ausschnitte einer hydraulischen Bremsanlage eines Fahrzeuges dargestellt. Figur 11 enthält für verschiedene Fahrzustände des Fahrzeuges Zeitdiagramme, die den Verlauf der erfindungswesentlichen Signale zeigen. In Figur 12 wird der Zusammenhang der Signale Avl, Aa, Ab sowie Ac dargestellt.

Das in den Figuren verwendete Zeichen a/o steht für den Ausdruck "und/oder". So bedeutet beispielsweise der Ausdruck "ayi a/o omegai" entsprechend "ayi und/oder omegai".

In den Figuren sind identische Komponenten mit der selben Ziffer gekennzeichnet.

### Ausführungsbeispiel

Die Erfindung soll nun anhand eines Ausführungsbeispiels mit Hilfe der Figuren 1 bis 11 beschrieben werden.

Die spezielle Form des gewählten Ausführungsbeispiels soll keine Einschränkung der erfindungsgemäßen Idee darstellen.

Figur 1 zeigt in einem Übersichtsblockschaltbild eine Steuereinrichtung, in der die erfindungsgemäße Idee eingesetzt wird. Mit 101 ist das Steuergerät bezeichnet. Im Block 102 sind die Raddrehzahlsensoren 102vl, 102vr, 102hl bzw. 102hr zusammengefaßt. In einer vereinfachenden Schreibweise werden die Raddrehzahlsensoren nachfolgend mit 102ij gekennzeichnet. Dabei gibt der Index i an, ob sich der Sensor an der Hinter- oder der Vorderachse befindet. Der Index j zeigt die Zuordnung zur rechten bzw. zur linken Fahrzeugseite an. Diese Kennzeichnung durch die beiden Indizes i bzw. j ist für sämtliche Größen bzw. Komponenten, bei denen sie Verwendung findet, entsprechend.

Jeder der Raddrehzahlsensoren 102ij erzeugt ein Signal Nij, welches die Geschwindigkeit des Rades, dem der Raddrehzahlsensor 102ij zugeordnet ist, repräsentiert. Bei den Signalen Nij handelt es sich vorzugsweise um periodische Signale, deren Frequenz ein Maß für die Radgeschwindigkeit ist. Entsprechend den Raddrehzahlsensoren 102ij gilt für deren Signale Nij die selbe Kennzeichnung durch die Indizes i bzw. j. Das vom Raddrehzahlsensor 102vl erzeugte Signal Nvl wird dem Steuergerät 101 zugeführt. Gleiches gilt für die Raddrehzahlsensoren 102vr, 102hl bzw. 102hr und den von ihnen erzeugten Signalen Nvr, Nhl bzw. Nhr.

Im Block 103 wird in bekannter Weise die Fahrzeuggeschwindigkeit vf ermittelt. Dabei kann die Fahrzeuggeschwindigkeit vf beispielsweise durch geeignete Mittelung aus den Radgeschwindigkeiten, oder durch Stützung mit einer für den jeweiligen Fahrzustand des Fahrzeuges besonders geeigneten Radgeschwindigkeit ermittelt werden. Sofern die Radgeschwindigkeiten und somit die Signale Nij für die Ermittlung der Fahrzeuggeschwindigkeit vf benötigt werden, werden sie dem Block 103 zugeführt. Dies wird durch die gestrichelte Darstellung des Pfeiles zwischen den Blöcken 102 und 103 angedeutet. Sofern im Block 103 benötigt, werden die Signale Nij in ihm zur weiteren Bearbeitung in geeignete Signale umgewandelt. Alternativ zur Ermittlung der Fahrzeuggeschwindigkeit vf auf der Basis der Radgeschwindigkeiten ist auch eine Bestimmung mittels Radar über Grund oder mittels geeigneter Navigationssysteme denkbar. Der Block 103 gibt ein Signal vf aus, dessen Wert der Fahrzeuggeschwindigkeit entspricht. Dieses Signal vf wird Block 101 zugeführt.

Mit Hilfe des Blockes 104 wird ein, den an den lenkbaren Rädern des Fahrzeuges eingestellten Lenkwinkel repräsentierendes Signal delta erzeugt. Vorzugsweise handelt es sich bei Block 104 um einen Lenkwinkelsensor. Das von ihm erzeugte Signal delta wird dem Steuergerät 101 zugeführt. Die Sensoranordnung 105 kann beispielsweise als Querbeschleunigungssensor die Querbeschleunigung ayi des Fahrzeuges an einem bestimmten Ort des Fahrzeuges und/oder als Gierratensensor die Gierwinkelgeschwindigkeit omegai, d.h. die Winkelgeschwindigkeit des Fahrzeuges um seine Hochachse erfassen. Die von der Sensoranordnung 105 erzeugten Signale ayi und/oder omegai werden ebenfalls dem Steuergerät 101 zugeführt. In einem Block 106 sind die Aktuatoren 106ij zusammengefaßt.

In Abhängigkeit der oben beschriebenen Eingangssignale ermittelt das Steuergerät 101 die Ansteuersignale Aij für die Aktuatoren 106ij. Für den Aktuator 106vl wird vom Steuergerät 101 das Ansteuersignal Avl ausgegeben. Entsprechendes gilt für die Aktuatoren 106vr, 106hl bzw. 106hr und die Ansteuersignale Avr, Ahl bzw. Ahr.

Anhand des Übersichtsblockschaltbildes in Figur 2 wird der prinzipielle Aufbau des Steuergerätes 101 beschrieben. Die von den Raddrehzahlsensoren 102ij - im Block 102 zusammengefaßt - erzeugten Signale Nij werden als Eingangssignale auf den Block 201 gegeben. Für den Fall, daß im Block 103 die Fahrzeuggeschwindigkeit vf in Abhängigkeit der Radgeschwindigkeiten ermittelt wird, werden die Signale Nij ebenfalls dem Block 103 zugeführt. Dies ist durch die gestrichelte Darstellung des Pfeiles zwischen Block 102 und Block 103 dargestellt.

Das im Block 103 ermittelte Signal vf, welches die Fahrzeuggeschwindigkeit repräsentiert, wird dem Block 201 zugeleitet. Der Block 201 erhält als weiteres Eingangssignal das mit Hilfe des Blockes 104 erzeugte Signal delta, welches den Lenkwinkel repräsentiert. Die mit Hilfe der Sensoranordnung 105 erzeugten Signale ayi für die Querbeschleunigung und/oder omegai für die Gierwinkelgeschwindigkeit werden ebenfalls dem Block 201 zugeleitet.

Block 201 stellt den Regler des Steuergerätes 101 dar. Er hat im wesentlichen die Aufgabe, ausgehend von einem Soll-Istwertvergleich eine Regelabweichung zu bestimmen und Signale für einen fahrerunabhängigen Bremseneingriff zu generieren. Vorzugsweise wird die Regelabweichung durch Bildung der Differenz aus Istwert bzw. Sollwert der Regelgröße gebildet. Als Regelgröße kommt beispielsweise eine Fahrdynamikgröße, wie die Querbeschleunigung und/oder die Gierwinkelgeschwindigkeit in Betracht. Je nach verwendetem Reglerkonzept kann die Regelung auf die Querbeschleunigung und/oder auf die Gierwinkelgeschwindigkeit erfolgen. Dies ist in Figur 2 dadurch angedeutet, daß dem Block 201 als Eingangssignale die Größen ayi und/oder omegai zugeführt werden.

Die vom Regler 201 ermittelte Regelabweichung wird als Signal diffay und/oder diffomega ausgegeben. Wobei diffay die Regelabweichung bei einer Regelung auf die Querbeschleunigung und diffomega die Regelabweichung bei einer Regelung auf die Gierwinkelgeschwindigkeit darstellt. Dieses Signal diffay und/oder diffomega dient als Eingangssignal des Blokkes 202. Ausgehend von der Regelabweichung diffay und/oder diffomega ermittelt der Regler 201 die Signale Sij, die der Ansteuerschaltung 206 sowie dem Block 204 zugeführt werden. Die Signale Sij zeigen an, ob und in welchem Umfang an den Rädern des Fahrzeuges ein fahrerunabhängiger Bremseneingriff durchgeführt werden muß. Vorzugsweise können für die Ermittlung der Größen Sij weitere Größen verwendet werden. Die Funktion bzw. der prinzipielle Aufbau des Reglers 201 wird in Figur 4 ausführlicher dargestellt.

In Block 202 wird ausgehend von der Regelabweichung diffay und/oder diffomega ein die Fahrzeugbewegung beschreibendes und/oder beeinflussendes Kriterium Kr bestimmt. Ausgehend von diesem Kriterium Kr wird festgestellt, ob ein fahrerunabhängiger Bremseneingriff an einem Rad absehbar ist. Das Signal Kr wird dem Block 204 als Eingangsgröße zugeleitet. Die Funktionsweise des Blockes 202 ist detailliert im Flußdiagramm der Figur 5 dargestellt.

Dem Block 203 werden als Eingangssignale die Signale Nij bzw. das Signal vf zugeführt. Ausgehend von diesen Eingangssignalen ermittelt der Block 203 für jedes Rad eine die Raddynamik beschreibende Größe, die als Signale Rij ausgegeben werden. Die Funktionsweise bzw. der prinzipielle Aufbau des Blockes 203 ist ausführlich in Figur 7 dargestellt. Die Signale Rij werden dem Block 204 zugeleitet. In Abhängigkeit der Signale Rij, welche die Raddynamik für jedes Rad beschreiben, und des Signals Kr, welches ein die Fahrzeugbewegung beschreibendes und/oder beeinflussendes Kriterium darstellt, bildet der Block 204 die Signale tFPij, FPij sowie ZFPij. Das Signal FPij zeigt an, ob für das zugehörige Rad eine geringfügige Betätigung der Aktuatoren von variabler Dauer nötig ist. Das Signal ZFPij gibt an, ob der Zustand der zugehörigen Aktuatoren, der nach der geringfügigen Betätigung variabler Dauer der entsprechenden Aktuatoren erreicht wurde, beibehalten werden soll. Die Signale tFPij stellen ein Maß für die variable Dauer der geringfügigen Betätigung der zum entsprechenden Rad zugeordneten Aktuatoren dar. Die variable Dauer der geringfügigen Betätigung entspricht einer Ansteuerzeit für die Aktuatoren, um an diesen einen definierten Zustand zu erreichen.

Die Signale tFPij werden dem Block 205 zugeführt. Ausgehend von diesen Signalen tFPij bildet der Block 205 Korrekturfaktoren Koij, mit denen die Ansteuersignale Aij für die Aktuatoren 106ij und/oder eine die Ansteuersignale Aij beeinflussende Größe korrigiert werden. Die Korrekturfaktoren Koij können beispielsweise durch einen Vergleich der Zeiten tFPij mit einem fest vorgegebenen Wert tfüll ermittelt werden. Als Vergleich kann beispielsweise die Bildung des Quotienten Koij = tFPij/tfüll eingesetzt werden. Der Wert tfüll entspricht einer vorab ermittelten Zeit, die beispielsweise bei einer hydraulischen Bremsanlage benötigt wird, um bei einem geringen Bremsdruckaufbau die Bremsbacken und/oder die Bremsbeläge einer entsprechenden Radbremse gerade so anzulegen, daß dadurch am entsprechenden Rad noch kein nennenswertes Bremsmoment erzeugt wird.

Die Korrekturfaktoren können, entsprechend der beschriebenen Ermittlung der Korrekturfaktoren basierend auf den Zeiten tFPij, die im Rahmen eines Bremskraftaufbaus ermittelt werden, auch unter Verwendung solcher Zeiten ermittelt werden, die im Rahmen eines Bremskraftabbaus ermittelt werden.

Die Korrekturfaktoren Koij werden neben den Signalen FPij, ZFPij sowie Sij dem Block 206 zugeführt. Ausgehend von diesen Signalen bildet der Block 206 die Ansteuersignale Aij, mit denen die im Block 106 zusammengefaßten Aktuatoren 106ij angesteuert werden. Durch die Signale Sij wird dem Block 206 mitgeteilt, ob und in welchem Umfang für welches Rad des Fahrzeuges ein fahrerunabhängiger Bremseneingriff durchgeführt werden muß. Durch das Signal FPij wird dem Block 206 angezeigt, für welches Rad eine geringfügige Betätigung variabler Dauer der zugehörigen Aktuatoren vor dem absehbaren fahrerunabhängigen Bremseneingriff erforderlich ist. Das Signal ZFPij enthält die Information, ob der nach der geringfügigen Betätigung variabler Dauer der entsprechenden Aktuatoren an der zugehörigen Radbremse erreichte Zustand beibehalten werden soll.

Der im Steuergerät 101 enthaltene Regler 201 kann nach verschiedenen Regelkonzepten arbeiten. Dies bedeutet, daß beispielsweise die Querbeschleunigung ayi an einem bestimmten Ort des Fahrzeuges und/oder die Gierwinkelgeschwindigkeit omegai des Fahrzeuges als Regelgröße verwendet werden kann. Je nach gewähltem Regelkonzept des Reglers 201 ist eine unterschiedliche Sensorkonfiguration für die Ermittlung des Istwertes der Regelgröße erforderlich. Dies ist in Figur 3 dargestellt.

In Figur 3 ist das Steuergerät 101 dargestellt. Dieses erzeugt die Ansteuersignale Aij, mit denen die im Block 106 zusammengefaßten Aktuatoren 106ij angesteuert werden. Desweiteren sind in Figur 3 die Blöcke 301, 302, 303 bzw. 304 dargestellt, welche jeder für sich eine unterschiedliche Sensorkonfiguration darstellt. In Abhängigkeit des gewählten Reglerkonzeptes, nach dem der Regler 201 arbeitet, kann alternativ eine dieser vier Sensorkonfigurationen eingesetzt werden.

In der Sensorkonfiguration 301 sind folgende Komponenten enthalten: Block 104 ist ein Sensormittel, mit dessen Hilfe der an den lenkbaren Rädern eingeschlagene Lenkwinkel erfaßt werden kann, und das ein entsprechendes Signal delta erzeugt, dessen Wert dem Lenkwinkel entspricht. Vorzugsweise handelt es sich bei dem Sensormittel 104 um einen Lenkwinkelsensor. Das Sensormittel 105a stellt vorzugsweise einen Querbeschleunigungssensor dar, mit dem die an einem bestimmten Ort des Fahrzeuges angreifende Querbeschleunigung erfaßt werden kann, und welches ein entsprechendes Signal ayi erzeugt, dessen Wert der Querbeschleunigung entspricht. Analog zur Sensorkonfiguration 301 enthält auch die Sensorkonfiguration 302 ein Sensormittel 104 zur Erfassung des Lenkwinkels delta. Das in der Sensorkonfiguration 302 enthaltene Sensormittel 105b dient der Erfassung der Gierwinkelgeschwindigkeit des Fahrzeuges um seine Hochachse und der Erzeugung eines entsprechenden Signals omegai, dessen Wert der Gierwinkelgeschwindigkeit entspricht. Vorzugsweise ist das Sensormittel 105b als Gierratensensor ausgebildet.

Auch die Sensorkonfiguration 303 enthält ein Sensormittel 104 zur Erfassung des Lenkwinkels delta. Zusätzlich zu diesem enthält die Sensorkonfiguration 303 ein Sensormittel 105a, mit dem die an einem bestimmten Ort des Fahrzeuges angreifende Querbeschleunigung erfaßt und ein entsprechendes Signal ayi ausgegeben werden kann. Vorzugsweise ist dieses Sensormittel 105a als Querbeschleunigungssensor ausgebildet. Mit Hilfe des Sensormittels 105b wird die Gierwinkelgeschwindigkeit des Fahrzeuges um seine Hochachse erfaßt und ein entsprechendes Signal omegai ausgegeben. Vorzugsweise ist dieses Sensormittel 105b als Gierratensensor ausgebildet.

Analog zu den anderen Sensorkonfigurationen enthält auch die Sensorkonfiguration 304 ein Sensormittel 104 zur Ermittlung des Lenkwinkels und zur Ausgabe eines entsprechenden Signals delta. Das Sensormittel 105a ist entsprechend dem in der Sensorkonfiguration 303 enthaltenen ausgebildet. Das Sensormittel 105a' dient analog dem Sensormittel 105a der Erfassung der an einem zweiten bestimmten Ort des Fahrzeuges angreifenden Querbeschleunigung und der Erzeugung eines entsprechenden Signals ayi'. Entsprechend dem Sensormittel 105a ist das Sensormittel 105a' ebenfalls vorzugsweise als Querbeschleunigungssensor ausgebildet. Basierend auf den beiden an verschiedenen Orten des Fahrzeuges angreifenden Querbeschleunigungen ayi bzw. ayi' kann auf die Gierwinkelgeschwindigkeit des Fahrzeuges um seine Hochachse geschlossen werden. Somit stellt die Verwendung zweier Querbeschleunigungssensoren eine Alternative zur Verwendung eines Gierratensensors dar. Dies wird in den Figuren 1, 2 sowie 4 durch Verwendung des Blockes 105 berücksichtigt. Je nach dem, welches Reglerkonzept im Regler 201 realisiert ist, stellt der Block 105 eine Konfiguration aus den Sensormitteln 105a und/oder 105a' und/oder 105b gemäß der in Figur 3 dargestellten Sensorkonfigurationen 301, 302, 303 bzw. 304 dar.

In Figur 4 ist der prinzipielle Aufbau des im Steuergerät 101 enthaltenen Reglers 201 dargestellt. Mit Hilfe der im Block 102 zusammengefaßten Raddrehzahlsensoren 102ij werden die die Radgeschwindigkeit der einzelnen Räder beschreibenden Signale Nij erzeugt. Optional werden diese Block 103 zugeführt. Im Block 103 wird die Fahrzeuggeschwindigkeit ermittelt. Das die Fahrzeuggeschwindigkeit repräsentierende Signal vf wird Block 401 zugeführt. Zusätzlich wird dem Block 401 das mit Hilfe des Sensormittels 104 erzeugte Signal delta, welches den Lenkwinkel repräsentiert, zugeleitet. Block 401 stellt ein Mittel zur Berechnung bzw. Ermittlung des Sollwertes der im Regler 201 verwendeten Regelgröße dar. Liegt dem Regler 201 die an einem bestimmten Ort des Fahrzeuges angreifende Querbeschleunigung als Regelgröße zugrunde, so wird im Block 401 ein Sollwert ays für die Querbeschleunigung ermittelt. Liegt dagegen die Gierwinkelgeschwindigkeit des Fahrzeuges um seine Hochachse als Regelgröße zugrunde, so wird im Block 401 ein Sollwert omegas ermittelt. Sowohl die Ermittlung des Sollwertes ays für die Querbeschleunigung des Fahrzeuges als auch die Ermittlung des Sollwertes omegas für die Gierwinkelgeschwindigkeit des Fahrzeuges kann beispielsweise unter Verwendung eines entsprechenden mathematischen Modells erfolgen, dem als Eingangsgröße wenigstens die Fahrzeuggeschwindigkeit vf sowie der Lenkwinkel delta dienen.

Der Sollwert ays für die Querbeschleunigung und/oder der Sollwert omegas für die Gierwinkelgeschwindigkeit wird dem Block 402 zugeleitet. Die mit der Sensoranordnung 105 ermittelten Werte für die an einem bestimmten Ort des Fahrzeuges angreifend Querbeschleunigung ayi und/oder die Gierwinkelgeschwindigkeit omegai stellen die Istwerte der entsprechenden Größen dar. Der Istwert ayi für die an einem bestimmten Ort des Fahrzeuges angreifende Querbeschleunigung und/oder der Istwert omegai für die Gierwinkelgeschwindigkeit werden dem Block 402 zugeführt. Mit Hilfe des Blockes 402 wird die Regelabweichung diffay für die Querbeschleunigung und/oder die Regelabweichung diffomega für die Gierwinkelgeschwindigkeit des Fahrzeuges bestimmt. Beispielsweise kann die Bestimmung der Regelabweichung durch Bildung der Differenz aus Istwert und Sollwert erfolgen. Die Regelabweichung diffay für die Querbeschleunigung und/oder die Regelabweichung diffomega für die Gierwinkelgeschwindigkeit des Fahrzeuges werden gleichzeitig dem Block 403 und dem Block 202 zugeleitet.

Dem Block 405 werden als Eingangssignale die Signale Nij sowie das Signal vf zugeführt. In Abhängigkeit der Signale Nij sowie des Signals vf werden im Block 405 die aktuellen Werte lambdaij des am entsprechenden Rad vorliegenden Schlupfes in bekannter Weise ermittelt. Die aktuellen Schlupfwerte lambdaij werden gleichzeitig dem Block 403 und dem Block 404 zugeleitet. In Abhängigkeit der Regelabweichung diffay für die Querbeschleunigung und/oder der Regelabweichung diffomega für die Gierwinkelgeschwindigkeit des Fahrzeuges und der aktuellen Werte bzw. Istwerte lambdaij für den Schlupf des entsprechenden Rades werden in Block 403 die Sollschlupfänderungen deltalambdasij für die jeweiligen Räder ermittelt. Die Verwendung der Regelabweichung diffay für die Querbeschleunigung und/oder der Regelabweichung diffomega für die Gierwinkelgeschwindigkeit des Fahrzeuges und die Verwendung der Istwerte lambdaij für die Schlupfwerte stellt für die Ermittlung der Sollschlupfänderungen deltalambdasij keine Einschränkung dar. Selbstverständlich können zur Berechnung der Sollschlupfänderungen deltalambdasij weitere Größen wie beispielsweise der Schräglaufwinkel und/oder die resultierenden Reifenkräfte verwendet werden. Die Sollschlupfänderungen deltalambdasij werden dem Block 404 als weiteres Eingangssignal zugeführt. In Abhängigkeit der Sollschlupfänderungen deltalambdasij und der Istwert lambdaij bildet der Block 404 die Steuersignale Sij für die Ansteuereinheit 206 der Aktuatoren 106ij.

Anhand des Flußdiagrammes der Figur 5 wird die im Block 202 ablaufende Bestimmung des die Fahrzeugbewegung beschreibenden und/oder beeinflussenden Kriteriums beschrieben. Die Bestimmung des die Fahrzeugbewegung beschreibenden und/oder beeinflussenden Kriteriums startet mit Schritt 501. Im nachfolgenden Schritt 502 wird die Regelabweichung diffay für die Querbeschleunigung und/oder die Regelabweichung diffomega für die Gierwinkelgeschwindigkeit des Fahrzeuges eingelesen. Im nächsten Schritt 503 wird der Betrag der Regelabweichung diffay und/oder der Betrag der Regelabweichung diffomega gebildet. Im daran anschließenden Schritt 504 wird die zeitliche Ableitung der Regelabweichung diffay gemäß d(diffay)/dt und/oder die zeitliche Ableitung der Regelabweichung diffomega gemäß d(diffomega)/dt gebildet. Im nächsten Schritt 505 wird der Betrag der zeitlichen Ableitung der Regelabweichung diffay und/oder der Betrag der zeitlichen Ableitung der Regelabweichung ermittelt. An Schritt 505 schließt sich der Schritt 506 an.

Mit Hilfe der in den Schritten 506, 507 bzw. 508 stattfindenden Abfragen wird festgestellt, ob ein fahrerunabhängiger Bremseneingriff absehbar ist. In Abhängigkeit des Ergebnisses dieser Beurteilung wird dem Signal Kr ein entsprechender Wert zugewiesen.

Die in den Schritten 506, 507 bzw. 508 enthaltenen Abfragen stellen eine Möglichkeit dar, wie das die Fahrzeugbewegung beschreibende und/oder beeinflussende Kriterium Kr ermittelt werden kann. Diese Möglichkeit soll keine Einschränkung darstellen. Selbstverständlich kann für sich allein die Regelabweichung diffay und/oder die Regelabweichung diffomega bzw. für sich allein die zeitliche Ableitung der Regelabweichung diffay und/oder die der Regelabweichung diffomega bzw. eine Kombination aus beiden für die Ermittlung der des Kriteriums Kr verwendet werden.

Im Schritt 506 wird eine erste Abfrage durchgeführt. Hierzu wird im Schritt 506 der Betrag der Regelabweichung diffay der Querbeschleunigung mit einem ersten Schwellwert S1ay für die Regelabweichung der Querbeschleunigung und/oder der Betrag der Regelabweichung diffomega der Gierwinkelgeschwindigkeit des Fahrzeuges mit einem ersten Schwellwert Slomega für die Regelabweichung der Gierwinkelgeschwindigkeit des Fahrzeuges verglichen. Wird bei diesem Vergleich festgestellt, daß der Betrag der Regelabweichung diffay größer ist als der erste Schwellwert S1ay und/oder wird festgestellt, daß der Betrag der Regelabweichung diffomega größer ist als der erste Schwellwert Slomega, so wird als nächster Schritt der Schritt 509 ausgeführt.

Wird dagegen bei dem im Schritt 506 stattfindenden Vergleich festgestellt, daß der Betrag der Regelabweichung diffay kleiner ist als der erste Schwellwert S1ay und/oder daß der Betrag der Regelabweichung diffomega kleiner ist als der erste Schwellwert Slomega, so wird als nächster Schritt der Schritt 507 ausgeführt.

Im Schritt 507 findet eine zweite Abfrage statt. Hierzu wird der Betrag der zeitlichen Ableitung der Regelabweichung diffay der Querbeschleunigung mit einem zweiten Schwellwert S2ay für die zeitliche Ableitung der Regelabweichung der Querbeschleunigung und/oder der Betrag der zeitlichen Ableitung der Regelabweichung diffomega der Gierwinkelgeschwindigkeit des Fahrzeuges mit einem zweiten Schwellwert S2omega für die zeitliche Ableitung der Regelabweichung der Gierwinkelgeschwindigkeit des Fahrzeuges verglichen. Wird bei dem im Schritt 507 stattfindenden Vergleich festgestellt, daß der Betrag der zeitlichen Ableitung der Regelabweichung diffay größer ist als der zweite Schwellwert S2ay und/oder wird festgestellt, daß der Betrag der zeitlichen Ableitung der Regelabweichung diffomega größer ist als der zweite Schwellwert, so wird als nächster Schritt der Schritt 509 ausgeführt.

Wird dagegen bei der Abfrage im Schritt 507 festgestellt, daß der Betrag der zeitlichen Ableitung der Regelabweichung diffay kleiner ist als der zweite Schwellwert und/oder wird festgestellt, daß der Betrag der zeitlichen Ableitung der Regelabweichung diffomega kleiner ist als der zweite Schwellwert S2omega, so wird als nächster Schritt der Schritt 508 ausgeführt.

Im Schritt 508 findet eine weitere Abfrage statt. Hierzu wird im Schritt 508 der Betrag der Regelabweichung diffay der Querbeschleunigung mit einem dritten Schwellwert S3ay für die Regelabweichung der Querbeschleunigung und/oder der Betrag der Regelabweichung diffomega für die Gierwinkelgeschwindigkeit des Fahrzeuges mit einem dritten Schwellwert S3omega für die Regelabweichung der Gierwinkelgeschwindigkeit des Fahrzeuges verglichen.

Gleichzeitig wird der Betrag der zeitlichen Ableitung der Regelabweichung diffay für die Querbeschleunigung mit einem vierten Schwellwert S4ay für die zeitliche Ableitung der Regelabweichung der Querbeschleunigung und/oder der Betrag der zeitlichen Ableitung der Regelabweichung diffomega der Gierwinkelgeschwindigkeit des Fahrzeuges mit einem vierten Schwellwert S4omega für die zeitliche Ableitung der Regelabweichung der Gierwinkelgeschwindigkeit verglichen.

Wird bei diesen Vergleichen festgestellt, daß der Betrag der Regelabweichung diffay größer ist als der dritte Schwellwert S3ay und/oder der Betrag der Regelabweichung diffomega größer ist als der dritte Schwellwert S3omega und wird gleichzeitig festgestellt, daß der Betrag der zeitlichen Ableitung der Regelabweichung diffay größer ist als der vierte Schwellwert S4ay und/oder der Betrag der zeitlichen Ableitung der Regelabweichung diffomega größer ist als der vierte Schwellwert S4omega, so wird als nächster Schritt der Schritt 509 ausgeführt. Wird dagegen bei dem Vergleich festgestellt, daß der Betrag der Regelabweichung diffay kleiner ist als der dritte Schwellwert S3ay und/oder der Betrag der Regelabweichung diffomega kleiner ist als der dritte Schwellwert S3omega oder wird gleichzeitig festgestellt, daß der Betrag der zeitlichen Ableitung der Regelabweichung diffay kleiner ist als der vierte Schwellwert S4ay und/oder der Betrag der zeitlichen Ableitung der Regelabweichung diffomega kleiner ist als der vierte Schwellwert S4omega, so wird als nächster Schritt der Schritt 510 ausgeführt.

Im Schritt 509 wird dem Signal Kr der Wert TRUE zugewiesen. Als nächster Schritt wird der Schritt 511 ausgeführt. Im Schritt 510 wird dem Signal Kr der Wert FALSE zugewiesen. Nach Schritt 510 wird als nächster Schritt der Schritt 511 ausgeführt. Im Schritt 511 wird das Signal Kr ausgegeben.

Mit Hilfe des Signals Kr wird den entsprechenden weiterverarbeitenden Mitteln im Steuergerät mitgeteilt, ob ein fahrerunabhängiger Bremseneingriff absehbar ist. Hat das Signal Kr den Wert TRUE, so bedeutet dies, daß ein fahrerunabhängiger Bremseingriff absehbar ist. Hat das Signal Kr dagegen den Wert FALSE, so bedeutet dies, daß kein fahrerunabhängiger Bremseingriff absehbar ist.

Die Bestimmung des Kriteriums, anhand dessen festgestellt werden kann, ob ein fahrerunabhängiger Bremseneingriff absehbar ist, wird mit dem Schritt 512 beendet.

Anhand der Figuren 6a, 6b, 6c sowie 6d soll auf das die Fahrzeugbewegung beschreibende und/oder beeinflussende Kriterium, welches durch die Abfragen in den Schritten 506, 507 bzw. 508 gebildet wird, näher eingegangen werden.

Die Figuren 6a, 6b, 6c sowie 6d zeigen den zeitlichen Verlauf des Istwertes bzw. des Sollwertes einer Regelgröße. Als Regelgröße ist hier beispielsweise die Gierwinkelgeschwindigkeit des Fahrzeuges um seine Hochachse gewählt. Der Sollwert der Regelgröße ist mit omegas, der Istwert der Regelgröße ist mit omegai bezeichnet. Mit t0 ist der Zeitpunkt bezeichnet, zu dem die Abfragen der Schritte 506, 507 bzw. 508 ausgeführt werden. Die Figuren 6a, 6b, 6c sowie 6d zeigen unterschiedliches Verhalten was den Istwert der Regelgröße angeht. In allen vier Fällen sei der Verlauf des Sollwertes omegas der Regelgröße als identisch angenommen.

Zur Durchführung der in den Schritten 506, 507 bzw. 508 enthaltenen Abfragen, werden sowohl die Regelabweichung der Regelgröße (diffay und/oder diffomega) als auch die zeitliche Ableitung der Regelabweichung (d(diffay)/dt bzw. d(diffomega)/dt) betrachtet. Somit wird das die Fahrzeugbewegung beschreibende und/oder beeinflussende Kriterium in Abhängigkeit der Regelabweichung und der zeitlichen Ableitung der Regelabweichung gebildet. Die Regelabweichung ist hierbei die Abweichung des Istwertes einer Fahrdynamikgröße, beispielsweise der Querbeschleunigung und/oder der Gierwinkelgeschwindigkeit des Fahrzeuges von einem für diese vorgegebenen Sollwert.

Mit der Abfrage im Schritt 506 wird festgestellt, ob die Regelabweichung der Querbeschleunigung und/oder die der Gierwinkelgeschwindigkeit des Fahrzeuges größer ist als ein erster Schwellwert. Ist dies der Fall, so ist dies ein Zeichen dafür, daß ein vom Regler durchgeführter, fahrerunabhängiger Bremseneingriff absehbar ist. Folglich wird im Schritt 509 dem Signal Kr der Wert TRUE zugewiesen.

Im Schritt 507 wird der Betrag der zeitlichen Ableitung der Regelabweichung der Querbeschleunigung und/oder der der Gierwinkelgeschwindigkeit des Fahrzeuges mit einem zweiten Schwellwert verglichen. Ist der Betrag der zeitlichen Ableitung der Regelabweichung der Querbeschleunigung und/oder der der Gierwinkelgeschwindigkeit des Fahrzeuges größer als der zweite Schwellwert, so ist dies ein Zeichen dafür, daß ein vom Regler durchgeführter, fahrerunabhängiger Bremseneingriff absehbar ist. Aus diesem Grund wird im Schritt 509 dem Signal Kr der Wert TRUE zugewiesen.

Die im Schritt 508 ausgeführte Abfrage kombiniert eine Abfrage bezüglich des Betrages der Regelabweichung der Querbeschleunigung und/oder der der Gierwinkelgeschwindigkeit des Fahrzeuges mit einer Abfrage bezüglich des Betrages der zeitlichen Ableitung der Regelabweichung der Querbeschleunigung und/oder der der Gierwinkelgeschwindigkeit. Wenn der Betrag der Regelabweichung der Querbeschleunigung und/oder der der Gierwinkelgeschwindigkeit des Fahrzeuges größer als ein dritter Schwellwert ist, und wenn gleichzeitig der Betrag der zeitlichen Ableitung der Regelabweichung der Querbeschleunigung und/oder der der Gierwinkelgeschwindigkeit größer als ein vierter Schwellwert ist, so ist dies ein Zeichen dafür, daß ein vom Regler ausgeführter, fahrerunabhängiger Bremseingriff absehbar ist. Folglich wird im Schritt 509 dem Signal Kr der Wert TRUE zugewiesen.

Für die Schwellwerte gelten folgende Zusammenhänge: Der Schwellwert S1ay ist größer als der Schwellwert S3ay. Entsprechendes gilt für den Schwellwert Slomega und den Schwellwert S3omega. Ferner ist der Schwellwert S2ay größer als der Schwellwert S4ay. Entsprechendes gilt für den Schwellwert S2omega und den Schwellwert S4omega. Unter Berücksichtigung der Abfragen in den Schritten 506, 507 bzw. 508 bedeutet dies: Liegt ein Fahrzustand für das Fahrzeug vor, bei dem der Betrag der Regelabweichung diffay und/oder der der Regelabweichung diffomega einen Wert annimmt, der größer als ein erster Schwellwert ist - dieser Fahrzustand wird durch die Abfrage im Schritt 506 festgestellt - so kann angenommen werden, daß ein fahrerunabhängiger Bremseingriff absehbar ist. Ebenso kann ein fahrerunabhängiger Bremseingriff als erforderlich angenommen werden, wenn ein Fahrzustand des Fahrzeuges vorliegt, bei dem der Betrag der zeitlichen Ableitung der Regelabweichung diffay und/oder der der Regelabweichung diffomega größer als ein zweiter Schwellwert ist. Diese Fahrzustände werden durch die Abfrage in Schritt 507 erfaßt. Ebenso kann bei einem Fahrzustand des Fahrzeuges, bei dem der Betrag der Regelabweichung diffay und/oder der der Regelabweichung diffomega kleiner ist als der erste Schwellwert und bei dem gleichzeitig der Betrag der zeitlichen Ableitung der Regelabweichung diffay und/oder der der Regelabweichung diffomega kleiner ist als der zweite Schwellwert ein fahrerunabhängiger Bremseneingriff absehbar erforderlich sein. Solche Pahrzustände des Fahrzeuges werden durch die Abfrage im Schritt 508 festgestellt.

Es sei darauf hingewiesen, daß die zeitliche Ableitung der Regelabweichung gleichbedeutend ist mit dem Gradienten der Regelabweichung.

Im folgenden sollen die in den Schritten 506, 507 bzw. 508 enthaltenen Abfragen anhand der in den Figuren 6a, 6b, 6c bzw. 6d dargestellten Kurvenverläufe nochmals erläutert werden.

Der in Figur 6a gezeigte Verlauf des Istwertes omegai der Regelgröße zeigt eine große Abweichung vom Verlauf des Sollwertes omegas der Regelgröße. Unter der Annahme, die Abweichung, die der Regelabweichung entspricht, sei größer als die erste Schwelle S1omega, wird zum Zeitpunkt t0 mit der Abfrage im Schritt 506 festgestellt, daß ein fahrerunabhängiger Bremseneingriff absehbar ist.

Der in Figur 6b dargestellte Verlauf des Istwertes omegai weist zwar keine allzu große Abweichung vom Verlauf des Sollwertes omegas auf, jedoch zeigt er einen sehr steilen Gradienten. Aufgrund des steilen Gradienten des Istwertes omegai kann darauf geschlossen werden, daß innerhalb einer kurzen Zeitdauer eine große Regelabweichung zwischen Istund Sollwert der Regelgröße vorliegen wird. Hierbei wird angenommen, daß mit einem steilen Gradienten des Istwertes omegai auch ein steiler Gradient der Regelabweichung verbunden ist. Unter der Annahme, die Abweichung, die der Regelabweichung entspricht, sei kleiner als die erste Schwelle Slomega und unter der Annahme, die zeitliche Ableitung bzw. der Gradient der Abweichung - die zeitliche Ableitung der Abweichung entspricht der zeitlichen Ableitung der Regelabweichung - sei größer als die zweite Schwelle S2omega wird zum Zeitpunkt t0 dieser Fahrzustand durch die Abfrage im Schritt 507 erfaßt. Das heißt durch die Abfrage im Schritt 507 wird für diesen Fahrzustand festgestellt, daß ein fahrerunabhängiger Bremseneingriff absehbar ist.

Der in Figur 6c dargestellte Verlauf des Istwertes omegai weist zum Zeitpunkt t0 eine kleine Abweichung zum Verlauf des Sollwertes omegas auf. Gleichzeitig zeigt der Verlauf des Istwertes omegai zum Zeitpunkt t0 einen flachen Gradienten. Aufgrund dieser Kombination aus geringer Regelabweichung und kleinem Gradienten des Verlaufes des Istwertes ist innerhalb einer kurzen Zeitdauer mit einer relativ großen Regelabweichung zwischen Istwert omegai und Sollwert omegas der Regelgröße zu rechnen. Unter der Annahme, die Regelabweichung sei kleiner als die erste Schwelle Slomega, jedoch größer als die dritte Schwelle S3omega und die zeitliche Ableitung der Regelabweichung sei kleiner als die zweite Schwelle S2omega, jedoch größer als die vierte Schwelle S4omega, wird zum Zeitpunkt t0 dieser Fahrzustand durch die Abfrage im Schritt 508 erfaßt. Das heißt mit der Abfrage im Schritt 508 wird festgestellt, daß für solche Fahrzustände ein fahrerunabhängiger Bremseneingriff absehbar ist.

Der in Figur 6d gezeigte Verlauf des Istwertes omegai weist zum Zeitpunkt t0 eine mittlere Abweichung zum Verlauf des Sollwertes omegas auf. Gleichzeitig weist der Verlauf des Istwertes einen flachen Gradienten auf. Unter der Annahme, daß dieser Fahrzustand die Abfragen der Schritte 507, 508 bzw. 509 nicht erfüllt, kann davon ausgegangen werden, daß sich der Verlauf des Istwertes omegai an den Verlauf des Sollwertes omegas mit zunehmender Zeitdauer annähern wird. Folglich ist bei diesem Verlauf kein fahrerunabhängiger Bremseingriff absehbar.

In Figur 7 ist der prinzipielle Aufbau des Blockes 203, in dem die die Raddynamik der Räder beschreibenden Größen Rij ermittelt werden, gezeigt. Dem Block 701 werden die Signale Nvl, Nvr, Nhl bzw. Nhr zugeführt. Ausgehend von diesen Eingangssignalen bildet Block 701 die Geschwindigkeitssignale vvl, vvr, vhl bzw. vhr der Räder. Diese werden gleichzeitig den Blöcken 702 bzw. 703 zugeführt. Im Block 702 wird für jedes der Geschwindigkeitssignale die zeitliche Ableitung bestimmt. Als Ausgangssignale gibt Block 702 die Signale d(vvl)/dt, d(vvr)/dt, d(vhl)/dt bzw. d(vhr)/dt aus. Die Werte dieser Signale beschreiben die Radverzögerung bzw. die Radbeschleunigung der einzelnen Räder. Diese Signale werden dem Block 704 als Eingangssignale zugeführt. Basierend auf diesen Eingangssignalen bildet Block 704 die die Raddynamik der Räder beschreibenden Größen Rvvl, Rvvr, Rvhl bzw. Rvhr. Diese Größen werden als Signale Rvij Block 706 zugeführt.

Neben den Geschwindigkeitssignalen vvl, vvr, vhl bzw. vhr wird dem Block 703 zusätzlich das Signal vf zugeführt. Ausgehend von diesen Größen bildet Block 703 die aktuellen, an den Rädern vorliegenden Schlupfwerte lambdavl, lambdavr, lambdahl bzw. lambdahr. Diese Größen werden Block 705 als Signale lambdaij zugeführt. Ausgehend von diesen Größen ermittelt Block 705 die Größen Rlvl, Rlvr, Rlhl bzw. Rlhr, die ebenfalls die Raddynamik des zugehörigen Rades beschreiben. Diese Größen werden als Signale Rlij ebenfalls Block 706 zugeführt.

In Abhängigkeit der Eingangsgrößen Rvij, die auf der Radverzögerung bzw. der Radbeschleunigung der Räder basieren, bzw. in Abhängigkeit der Größen Rlij, die auf dem aktuellen Schlupf der Räder basieren, bildet Block 706 die die Raddynamik des zugehörenden Rades beschreibenden Größen Rvl, Rvr, Rhl bzw. Rhr. Diese Größen werden als Signale Rij Block 204 zugeführt.

Die Beschreibung der Bestimmung der Größen Rij soll keine Einschränkung darstellen. So kann es durchaus von Vorteil sein, die Größen Rij lediglich in Abhängigkeit der Größen Rvij zu bestimmen, weshalb in diesem Fall die Blöcke 703 bzw. 705 nicht benötigt werden würden. Andererseits kann es von Vorteil sein, die Größen Rij lediglich in Abhängigkeit der Größen Rlij zu bestimmen. Hierbei wären dann die Blöcke 702 bzw. 704 nicht erforderlich. Allerdings können die Gröβen Rij, wie in Abbildung 7 dargestellt, auch durch Kombination der Größen Rvij und Rlij ermittelt werden.

Die Signale Rvij können beispielsweise durch einen Vergleich der zeitlichen Ableitungen der Radgeschwindigkeiten d(vij)/dt mit einem entsprechenden Schwellwert Svij gebildet werden. Ist beispielsweise die zeitliche Ableitung d(vvl)/dt größer als der Schwellwert Svvl, so wird dem Signal Rvvl der Wert TRUE zugewiesen, mit dem angezeigt wird, daß für das linke Vorderrad das Raddynamikkriterium erfüllt ist. Ist dagegen der Wert der zeitlichen d(vvl)/dt Ableitung kleiner als der Schwellwert Svvl, so wird dem Signal Rvvl der Wert FALSE zugewiesen. Entsprechend kann für die Signale Rlij verfahren werden, dabei werden jedoch eventuell andere Schwellwerte Slij verwendet.

Das in den Figuren 8a bzw. 8b dargestellte Flußdiagramm beschreibt die Arbeitsabläufe bzw. Funktionsweise des Blockes 204 anhand einer Betrachtung des linken Vorderrades. Dies stellt keine Einschränkung der erfindungsgemäßen Idee dar. Außerdem soll es keine Einschränkung darstellen, daß in jedem Schritt nur eine Operation ausgeführt wird, es ist durchaus denkbar, mehrere Operationen in einem Schritt zusammenzufassen. Unter Umständen kann es vorteilhaft sein, die Anordnung der einzelnen Schritte abzuändern.

Das Flußdiagramm startet mit Schritt 801. Im nächsten Schritt 802 wird die Größe Kr eingelesen, die anzeigt, ob ein fahrerunabhängiger Bremseneingriff absehbar ist. Im nachfolgenden Schritt 803 wird überprüft, ob die Größe Kr den Wert TRUE besitzt. Wenn die Größe Kr den Wert TRUE nicht besitzt, so wird als nächstes der Schritt 835 ausgeführt, mit dem der Arbeitsablauf beendet wird. Besitzt die Größe Kr den Wert TRUE, d.h. ist ein fahrerunabhängiger Bremseneingriff absehbar, so wird als nächster Schritt der Schritt 804 ausgeführt.

Im Block 804 wird das Zeitsignal tFPvl initialisiert, d.h. es wird ihm der Wert Null zugewiesen. Im nachfolgenden Schritt 805 werden die Größen Kr, Svl und Rvl eingelesen. Im nächsten Schritt 833 wird untersucht, ob der Wert des Signals Svl kleiner Null ist. Durch einen Wert für Svl, der kleiner als Null ist, gibt der Regler 201 vor, daß die Bremskraft am entsprechenden Rad reduziert werden muß. Da in diesen Fall kein Aufbau der Bremskraft erreicht werden soll, ist die weitere Abarbeitung des durch das Flußdiagramm beschriebenen Verfahrens nicht erforderlich. Deshalb wird für den Fall, daß der Wert von Svl kleiner Null ist, als nächstes der Schritt 834 ausgeführt und somit der Arbeitsablauf beendet. Ist der Wert von Svl größer als Null, so wird als nächstes der Schritt 806 ausgeführt. Im Schritt 806 wird der Wert des Signals tFPvl mit dem fest vorgegebenen Wert tfüll verglichen. Die Größe tfüll ist eine experimentell ermittelte Zeitdauer. Sie ist so bemessen, daß eine während dieser Zeitdauer tfüll ausgeführte geringfügige Betätigung der Aktuatoren 106ij im Normalfall keine wesentliche Bremswirkung an den Rädern erzielt. Ergibt die Abfrage im Schritt 806, daß die Zeit tFPvl größer als die Zeit tfüll ist, so wird unter der Annahme, daß die geringfügige Betätigung der Aktuatoren 106ij abgeschlossen sei, als nächstes der Schritt 811 ausgeführt. Durch die im Schritt 811 ausgeführte Abfrage, ob das Signal Svl einen Wert größer Null annimmt, wird ermittelt, ob der Regler 201 aufgrund des Fahrzustandes des Fahrzeuges unverzüglich einen aktiven Bremseneingriff ausführen wird. Besitzt das Signal Svl einen Wert größer Null, so wird der Regler 201 unverzüglich einen aktiven Bremseneingriff durchführen. Als nächstes wird der Schritt 812 ausgeführt. Hierbei wird dem Signal FPvl der Wert FALSE zugewiesen. Im nachfolgenden Schritt 813 wird das Signal FPvl ausgegeben. Dadurch wird den weiterverarbeitenden Blökken des Steuergerätes 101 angezeigt, daß die geringfügige Betätigung der Aktuatoren 106ij beendet ist. Im nächsten Schritt 814 wird der Wert tFPvl ausgegeben. Der nachfolgende Schritt 815 beendet den Arbeitsablauf im Block 204.

Wird im Schritt 811 ermittelt, daß der Wert des Signals Svl nicht von Null verschieden ist, d.h. wird der Regler 201 keinen fahrerunabhängigen Bremseneingriff ausführen, so wird als nächstes der Schritt 816 ausgeführt.

Im Schritt 816 wird abgefragt, ob das Signal Rvl den Wert FALSE hat, und ob das Signal Kr den Wert TRUE angenommen hat. Durch diese Abfrage wird festgestellt, ob das linke Vorderrad das Raddynamikkriterium schon erfüllt und ob ein fahrerunabhängiger Bremseneingriff absehbar ist. Wenn diese Bedingung erfüllt ist, wird als nächstes der Schritt 817 ausgeführt. In diesem Schritt wird dem Signal FPvl der Wert TRUE zugewiesen. Als nächstes wird das Signal FPvl im Schritt 818 ausgegeben. Daran anschließend wird im Schritt 819 das Zeitsignal tFPvl um den Wert deltat erhöht. Im Anschluß an Schritt 819 wird der Schritt 805 erneut ausgeführt.

Ist die im Schritt 816 in der Abfrage enthaltene Bedingung nicht erfüllt, so wird als nächstes der Schritt 820 ausgeführt.

Ergibt sich bei der Abfrage im Schritt 806, daß der Wert des Zeitsignals tFPvl kleiner als der Wert tfüll ist, so wird als nächstes der Schritt 807 ausgeführt. Im Schritt 807 findet die gleiche Abfrage wie im Schritt 816 statt. Ist die Bedingung der Abfrage im Schritt 807 erfüllt, so wird als nächstes der Schritt 808 ausgeführt. Im Schritt 808 wird dem Signal FPvl der Wert TRUE zugewiesen. Im anschließenden Schritt 809 wird das Signal FPvl ausgegeben. Im nachfolgenden Schritt 810 wird das Zeitsignal tFPvl um den Wert deltat erhöht. Daran anschließend wird erneut der Schritt 805 ausgeführt.

Ist die im Schritt 807 in der Abfrage enthaltene Bedingung nicht erfüllt, so wird als nächstes Schritt 820 ausgeführt. Im Schritt 820 wird dem Signal FPvl der Wert FALSE zugewiesen. An den Schritt 820 schließt sich der Schritt 821 an. In diesem Schritt wird das Signal FPvl ausgegeben. Daran anschließend wird im Schritt 822 dem Signal ZFPvl der Wert TRUE zugewiesen. Dieses Signal wird im Schritt 823 ausgegeben. Im darauffolgenden Schritt 824 wird das Signal Kr eingelesen. Dieses wird im nachfolgenden Schritt 825 ausgewertet. Wenn das Signal Kr den Wert TRUE hat, wird als nächstes der Schritt 826 ausgeführt. Im Schritt 826 wird ermittelt, ob der Wert des Signals Svl größer Null ist. Ist der Wert des Signals Svl nicht größer Null, so wird als nächster Schritt der Schritt 829 ausgeführt. In diesem Schritt wird dem Signal ZFPvl der Wert TRUE zugewiesen. Im Schritt 830 wird das Signal ZFPvl ausgegeben. Nach Schritt 830 wird erneut Schritt 824 ausgeführt.

Wird im Schritt 825 festgestellt, daß das Signal Kr nicht den Wert TRUE angenommen hat, so wird als nächstes der Schritt 827 ausgeführt. In diesem Schritt wird dem Signal ZFPvl der Wert FALSE zugewiesen. Das Signal ZFPvl wird im nachfolgenden Schritt 828 ausgegeben. Im Anschluß an Schritt 828 wird der Schritt 831 ausgeführt.

Wird im Schritt 826 festgestellt, daß der Wert des Signals Svl größer Null ist, so wird die Bearbeitung mit dem Schritt 831 fortgesetzt. In diesem Schritt wird der Wert des Zeitsignals tFPvl ausgegeben. Die Bearbeitung wird mit dem Schritt 832 beendet.

Dadurch daß die Schritte 817, 818 und 819 solange durchlaufen werden, wie die im Schritt 816 enthaltene Bedingung erfüllt ist, wird die gesamte geringfügige Betätigung der Aktuatoren 106vl bei jedem Durchlauf der Schritte 817, 818 und 819 um die Zeit deltat verlängert. Gleiches gilt für die Schritte 808, 809 und 810 sowie 807.

In Figur 9 ist anhand des Flußdiagrammes die im Block 206 durchgeführte Ermittlung der Ansteuersignale Aij für die Aktuatoren 106ij anhand einer Beschreibung für das linke Vorderrad beschrieben. Die Wahl des linken Vorderrades soll keine Einschränkung darstellen. Fahrzustände, die zu einer Betätigung der Aktuatoren führen, durch die am entsprechenden Rad die Bremskraft reduziert wird - dies wäre beispielsweise der Fall, wenn das Signal Svl einen Wert kleiner Null hätte - sind im Flußdiagramm der Figur 9 nicht berücksichtigt.

Die Ermittlung beginnt mit Schritt 901. Im nachfolgenden Schritt 902 werden die Größen ZFPvl, Svl, FPvl sowie Kovl eingelesen. Im nächsten Schritt, dem Schritt 903 wird ermittelt, ob der Wert des Signals Svl größer Null ist. Ist der Wert des Signals Svl größer Null, d.h. führt der Regler 201 einen fahrerunabhängigen Bremseneingriff aus, so wird im Schritt 904 ausgehend von dem Wert des Signals Svl die Betätigungsdauer für die Aktuatoren 106vl ermittelt. Die Ermittlung kann beispielsweise durch Berechnung der Betätigungsdauer ausgehend von dem Wert des Signals Svl vorgenommen werden. Ebenfalls ist eine Ermittlung mit Hilfe eines Kennlinienfeldes denkbar.

Im nachfolgenden Schritt 905 wird die ermittelte Betätigungsdauer für die Aktuatoren 106vl mit dem Korrekturfaktor Kovl korrigiert. Die Korrektur der Betätigungsdauer kann beispielsweise durch Multiplikation der in Schritt 904 ermittelten Betätigungsdauer mit dem Korrekturfaktor Kovl erfolgen.

Anschließend daran wird im Schritt 906 aus der korrigierten Betätigungsdauer das Ansteuersignal Avl generiert. Dieses wird im Schritt 907 ausgegeben. Danach wird der Vorgang durch Schritt 913 beendet.

Wird im Schritt 903 festgestellt, daß der Wert des Signals Svl kleiner Null ist, so wird als nächster der Schritt 908 ausgeführt. Im Schritt 908 wird ermittelt, ob das Signal FPvl den Wert TRUE besitzt. Wenn dies der Fall ist, so wird der Schritt 909 ausgeführt. Im Schritt 909 werden die Aktuatoren 106vl für die Zeitdauer deltat geringfügig betätigt. Nach dieser geringfügigen Betätigung der Aktuatoren 106vl wird die Bearbeitung mit dem Schritt 913 beendet.

Wird mit der Abfrage im Schritt 908 festgestellt, daß das Signal FPvl nicht den Wert TRUE angenommen hat, so wird die Bearbeitung mit dem Schritt 910 fortgesetzt. Im Schritt 910 wird ermittelt, ob das Signal ZFPvl den Wert TRUE angenommen hat. Wenn das Signal diesen Wert angenommen hat, so wird im Schritt 911 der bisher eingestellte Zustand der Aktuatoren 106vl beibehalten. Danach wird die Bearbeitung mit dem Schritt 913 beendet. Wird dagegen im Schritt 910 festgestellt, daß das Signal ZFPvl den Wert TRUE nicht angenommen hat, so wird die Bearbeitung mit dem Schritt 912 fortgesetzt. In diesem Schritt werden die Aktuatoren 106vl so angesteuert, daß sie in ihren Grundzustand gebracht werden, was im Normalfall zu einem vollständigen Abbau der Bremskraft führt. Danach wird die Bearbeitung mit dem Schritt 913 beendet.

Selbstverständlich werden auch die Betätigungsdauern für die Aktuatoren 106vl, die im Rahmen einer vom Regler 201 vorgegebenen Bremskraftreduzierung ermittelt werden, entsprechend mit dem Korrekturfaktor Kovl korrigiert.

Es sei darauf hingewiesen, daß das in einem Steuergerät ablaufende Verfahren so strukturiert ist, daß sämtliche Teilverfahren, beispielsweise das im Flußdiagramm der Figur 8a bzw. 8b beschriebene und das im Flußdiagramm der Figur 9 beschriebene parallel bearbeitet werden. D.h. eine im Flußdiagramm der Figuren 8a bzw. 8b stattfindende Veränderung an einem Signalwert wird im nächsten Rechenzyklus gemäß dem in Figur 9 beschriebenen Flußdiagramm berücksichtigt. Ferner sei noch bemerkt, daß in den Schritten 911 bzw. 912 eine entsprechende Ermittlung des Werts des Signals Avl sowie eine Ausgabe dieses Signals erfolgt.

Es sei darauf hingewiesen, daß die erfindungsgemäße Idee in beliebigen Bremsanlagen eingesetzt werden kann. Beispielsweise können dies hydraulische oder elektrohydraulische, pneumatische oder elektropneumatische sowie elektromechanische Bremsanlagen sein. All diesen Bremsanlagen ist im Normalfall gemein, daß die Bremswirkung mit Hilfe von Reibungsbremsen beispielsweise Scheibenbremsen und/oder Trommelbremsen erzielt wird. Bei der Scheibenbremse wird die Bremskraft durch Andrücken der Bremsbacken an die Bremsscheibe realisiert. Bei der Trommelbremse drücken die Bremsbacken gegen die Bremstrommel.

In Figur 10 ist auszugsweise (angedeutet durch die gestrichelte Darstellung in der Zuleitung des Hauptbremszylinders 1009) ein Teil eines Bremskreises einer hydraulischen Bremsanlage dargestellt. Insbesondere wird hierbei der zum linken Vorderrad gehörige Teil betrachtet. Außer der in Abbildung gezeigten Kombination aus Bremsscheibe und Bremsbacken wäre auch eine aus einer Bremstrommel und einem Bremsbelag bestehende Kombination denkbar. Die Betrachtung einer hydraulischen Bremsanlage soll hierbei keine Einschränkung der Erfindungsidee darstellen.

Der in Figur 10 gezeigte Teil des Bremskreises besteht im wesentlichen aus den folgenden Komponenten: Dämpferkammer 1001, Rückschlagventile 1002 bzw. 1004, Förderpumpe 1003, Speicherkammer 1005, Einlaßventil 1006a, Auslaßventil 1006b, Bremsbackeneinheit 1007, Bremsscheibe 1008, Hauptbremszylinder 1009, Bremspedal 1010 sowie Steuereinheit 1011. Dabei sei angenommen, daß die Bremsbackeneinheit 1007 zusätzlich den Radbremszylinder enthält. Das Einlaßventil 1006a bzw. das Auslaßventil 1006b wird durch die vom Block 1011 generierten Signale Aa bzw. Ab beaufschlagt. Die Förderpumpe 1003 wird durch das Signal Ac angesteuert. Alle drei Signale, Aa, Ab sowie Ac, werden vom Block 1011 in Abhängigkeit des vom Block 206 erzeugten Ansteuersignals Avl generiert. Zum Aktuator 106vl sind die Komponenten 1003, 1006a, 1006b, 1007, 1008 sowie 1011 zusammengefaßt.

Im Block 1011 werden in Abhängigkeit des Wertes des Ansteuersignals Avl die Signale Aa, Ab bzw., Ac generiert. Durch das Signal Aa wird das Einlaßventil 1006a, durch das Signal Ab das Auslaßventil 1006b und durch das Signal Ac die Förderpumpe 1003 angesteuert. Ist der Wert des Ansteuersignals Avl größer Null, so wird nur das Signal Ac generiert, was dazu führt, daß die Förderpumpe 1003 eingeschaltet wird. Dadurch wird Bremsflüssigkeit in den Radbremszylinder gepumpt, was zu einer Drucksteigerung im Radbremszylinder und durch die Paarung Bremsbackeneinheit 1007 bzw. Bremsscheibe 1008 zu einem Bremskraftaufbau führt. Ist der Wert des Ansteuersignals Avl kleiner Null, so wird im Block 1011 nur das Signal Ab generiert. Folglich wird nur das Auslaßventil 1006b angesteuert. Dadurch kann Bremsflüssigkeit aus dem Radbremszylinder abfließen, was zu einer Verringerung des Bremsdruckes im Radbremszylinder und somit der Bremskraft führt. Nimmt dagegen das Ansteuersignal Avl den Wert Null an, so wird im Block 1011 nur das Signal Aa generiert. Folglich wird nur das Einlaßventil 1006a angesteuert. Dadurch wird der Druck im Radbremszylinder und somit die Bremskraft konstant gehalten.

Die in Figur 10 dargestellten Ventile 1006a bzw. 1006b befinden sich, so wie gezeigt, in ihrer Grundstellung. Werden sie angesteuert, so nehmen sie entsprechend den zweiten möglichen Zustand an. Im Grundzustand fördert die Förderpumpe nicht. Sie fördert nur Bremsflüssigkeit, wenn sie angesteuert wird.

Bei der geringfügigen Betätigung variabler Dauer der Aktuatoren wird bei der in Figur 10 dargestellten hydraulischen Teilbremsanlage die Förderpumpe 1003 für eine endliche Anzahl von Zeitdauern deltat angesteuert, danach befindet sich die Förderpumpe wieder im Grundzustand und das Einlaßventil 1006a wird angesteuert, um den erreichten Bremsdruck im Radbremszylinder und dadurch die erreichte Bremskraft zu erhalten. In jeder Zeitdauer delta bewegen sich die in der Bremsbackeneinheit 1007 enthaltenen Bremsbacken immer näher an die Radbremsscheibe 1008 aufgrund des entstehenden Bremsdruckaufbaues an. Die geringfügige Betätigung variabler Dauer der Aktuatoren ist dann beendet, wenn das Signal Rvl entsprechend den Wert TRUE annimmt. Dies ist dann der Fall, wenn die in der Bremsbackeneinheit 1007 enthaltenen Bremsbacken gerade an der Radbremsscheibe 1008 anliegen, ohne eine wesentliche Bremswirkung dabei zu erzielen. In diesem Zustand sind die Aktuatoren vorgespannt, ohne dabei eine wesentliche Bremswirkung zu erzielen.

Die erfindungsgemäße Idee kann ebenfalls bei einer elektrohydraulischen Bremsanlage eingesetzt werden. Gleiches gilt für eine pneumatische bzw. eine elektropneumatische Bremsanlage. Bei der elektropneumatischen wie auch bei einer pneumatischen Bremsanlage wird für den Bremsdruckaufbau anstelle der Bremsflüssigkeit ein kompressibles Medium verwendet. Bei diesen Bremsanlagen müssen eventuell andere, als die in diesem Ausführungsbeispiel beschriebenen Aktuatoren, angesteuert werden. Bei einer elektromechanischen Bremsanlage wird die Bremskraft direkt durch mit den Bremsbacken und/oder den Bremsbelägen gekoppelten Stellmotoren generiert, so daß bei einer solchen Bremsanlage diese Stellmotoren anstelle der Ventile 1006a bzw. 1006b und anstelle der Förderpumpe 1003 angesteuert werden.

In Figur 11 sind vier unterschiedliche Zeitdiagramme der für die Umsetzung der erfindungsgemäßen Idee erforderlichen Signale Kr, Rvl, Fpvl, ZFPvl, Svl, Avl sowie des Bremszylinderdruckes Pvl dargestellt. Die Betrachtung wird für das linke Vorderrad angestellt.

Die für das linke Vorderrad durchgeführte Betrachtung stellt keine Einschränkung der erfindungsgemäßen Idee dar. Die erfindungsgemäße Idee kann für alle Räder eines Fahrzeuges eingesetzt werden. Ferner soll auch die Betrachtung des Bremszylinderdruckes Pvl keine Einschränkung der erfindungsgemäßen Idee darstellen. Anstelle des Bremszylinderdruckes Pvl kann bei einer elektromechanisch betätigten Bremse beispielsweise der für die elektrischen Stellglieder zur Steuerung der Bremskraft erforderliche Strom betrachtet werden.

Im Fall 1 der Figur 11 sei angenommen, daß im Block 202 zum Zeitpunkt t1 ein Fahrzustand des Fahrzeuges erkannt wird, aufgrund dessen ein fahrerunabhängiger Bremseneingriff absehbar ist. Dieser Fahrzustand soll bis zum Zeitpunkt t2 andauern. Aus diesem Grund nimmt das Signal Kr zwischen den Zeitpunkten t1 und t2 den Wert TRUE an. Da zwischen den Zeitpunkten t1 und t2 ein Fahrzustand des Fahrzeugs vorliegt, aufgrund dessen ein fahrerunabhängiger Bremseneingriff absehbar ist, soll vor diesem absehbaren fahrerunabhängigen Bremseneingriff ein geringer Bremsdruck in den entsprechenden Radbremszylinder eingespeist werden. Aus diesem Grund gibt Block 204 für das Signal FPvl ab dem Zeitpunkt t1 den Wert TRUE aus. Dadurch wird ab dem Zeitpunkt t1 das Signal Avl mit einer kleinen Frequenz generiert. Dies führt ab dem Zeitpunkt t1, wie der Verlauf von Pvl zeigt, zu einem geringen Anstieg des Bremszylinderdruckes am entsprechenden Rad (flacher Gradient des Radbremszylinderdruckes). Ferner sei angenommen, daß während der durch die Zeitpunkte t1 und t2 bestimmten Zeitdauer zum einen das Rad das Raddynamikkriterium nicht erfüllt (das Signal Rvl hat während dieser Zeitdauer den Wert FALSE) und daß zum anderen vom Regler 201 kein fahrerunabhängiger Bremseneingriff durchgeführt werden muß (das Signal Svl hat während dieser Zeitdauer den Wert Null). Folglich kann der Bremsdruck bis zum Zeitpunkt t2 stetig zunehmen. Da ab dem Zeitpunkt t2 der Fahrzustand nicht mehr vorliegen soll, aufgrund dessen ein fahrerunabhängiger Bremseneingriff absehbar ist (die Signale Kr und FPvl haben ab diesem Zeitpunkt den Wert FALSE), kann ab diesem Zeitpunkt der geringe Bremsdruck im Radbremszylinder wieder abgebaut werden. Aus diesem Grund werden vom Block 206 für das Signal Avl negative, hochfrequente Pulse ausgegeben. Die hochfrequenten Pulse führen zu einem steilen Gradienten. Zum Zeitpunkt t3 ist der Abbau des geringen Bremsdruckes abgeschlossen, das Signal Avl nimmt den Wert Null an.

Im Fall 2 der Figur 11 sei angenommen, daß im Block 202 zum Zeitpunkt t1 ein Fahrzustand des Fahrzeuges erkannt wird, aufgrund dessen ein fahrerunabhängiger Bremseneingriff absehbar ist. Dieser Fahrzustand soll bis zum Zeitpunkt t3 andauern. Aus diesem Grund gibt Block 202 für das Signal Kr zwischen diesen Zeitpunkten den Wert TRUE aus. Ferner sei angenommen, daß ab dem Zeitpunkt t2 für das linke Vorderrad das Raddynamikkriterium erfüllt sei. Deshalb nimmt ab diesem Zeitpunkt t2 das vom Block 203 ausgegebene Signal Rvl den Wert TRUE an. Da das Signal Kr ab dem Zeitpunkt t1 den Wert TRUE hat, wird ab diesem Zeitpunkt dem Signal FPvl ebenfalls der Wert TRUE zugewiesen. Dies führt vor dem absehbaren fahrerunabhängigen Bremseneingriff zur Einspeisung eines geringer Bremsdruck in den entsprechenden Radbremszylinder, und zwar solange, wie das Signal Rvl den Wert FALSE hat, d.h. in der Zeitdauer zwischen den Zeitpunkten t1 und t2. In dieser Zeitdauer steigt der Radbremszylinderdruckes Pvl, wie im Fall 1 beschrieben, stetig an. Da ab dem Zeitpunkt t2 das linke Vorderrad das Radkriterium erfüllt, nimmt ab diesem Zeitpunkt das Signal Rvl den Wert TRUE an und dem Signal FPvl wird der Wert FALSE zugewiesen. Gleichzeitig wird dem Signal ZFPvl der Wert TRUE zugewiesen. Es sei angenommen, daß nach dem Zeitpunkt t2 der Regler 201 keinen fahrerunabhängigen Bremseneingriff durchführen muß (das Signal Svl behält den Wert Null bei). Da ab dem Zeitpunkt t2 das Raddynamikkriterium erfüllt ist, darf ab diesem Zeitpunkt der geringe Bremsdruck nicht weiter aufgebaut werden, er wird solange konstant gehalten, wie der Fahrzustand andauert, bei dem ein fahrerunabhängiger Bremseneingriff absehbar ist, d.h. bis zum Zeitpunkt t3. Aus diesem Grund hat das vom Block 204 ausgegebene Signal ZFPvl zwischen den Zeitpunkten t2 und t3 den Wert TRUE. Während dieser Zeitdauer wird vom Block 206 der Wert Null für das Signal Avl ausgegeben. Folglich ist der Wert des Radbremszylinderdruckes während den Zeitpunkten t2 und t3 konstant. Da ab dem Zeitpunkt t3 der Fahrzustand, bei dem ein fahrerunabhängiger Bremseneingriff absehbar ist, nicht mehr vorliegt, wird ab dem Zeitpunkt t3 der geringe Bremsdruck wieder abgebaut. Dies geschieht analog zu der für den Fall 1 beschriebenen Vorgehensweise. Ab dem Zeitpunkt t4 ist der Bremsdruck im Radbremszylinder abgebaut.

Im Fall 3 der Figur 11 sei angenommen, daß im Block 202 zum Zeitpunkt t1 ein Fahrzustand des Fahrzeuges erkannt wird, aufgrund dessen ein fahrerunabhängiger Bremseneingriff absehbar ist. Folglich gibt Block 202 für das Signal Kr den Wert TRUE aus. Gleichzeitig gibt Block 204 ab dem Zeitpunkt t1 den Wert TRUE für das Signal FPvl aus. Dies führt entsprechend Fall 2 ab dem Zeitpunkt t1 zu einem stetigen Aufbau eines geringen Bremsdruckes. Im vorliegenden Fall sei ferner angenommen, daß aufgrund des Fahrzustandes des Fahrzeuges der Regler 201 ab dem Zeitpunkt t2 einen fahrerunabhängigen Bremseneingriff durchführen muß. Aus diesem Grund gibt der Regler ab dem Zeitpunkt t2 für das Signal Svl einen Wert größer Null aus. Ab diesem Zeitpunkt ist der Aufbau des geringen Bremsdruckes nicht mehr erforderlich. Deshalb gibt Block 204 für das Signal Fpvl den Wert FALSE aus. Ab dem Zeitpunkt t2 soll der Radbremszylinderdruck stärker aufgebaut werden. Folglich erzeugt Block 206 ab dem Zeitpunkt t2 ein höherfrequentes Signal Avl. Dies führt zu einem stärkeren Anstieg des Bremsdruckes im Radbremszylinder. Ab dem Zeitpunkt t4 erkennt der Regler 201, daß der fahrerunabhängige Bremseneingriff nicht mehr erforderlich ist. Aus diesem Grund gibt er für das Signal Svl den Wert Null aus. Folglich muß ab dem Zeitpunkt t4 der Bremsdruck im entsprechenden Radbremszylinder abgebaut werden. Der Abbau des Bremsdruckes verläuft wie bereits in den vorigen Fällen beschrieben. Im Zeitdiagramm des Falles 3 ist angenommen, daß ab dem Zeitpunkt t2 die Ausgabe des Signals Rvl deaktiviert ist, folglich hat das Signal Rvl während des gesamten Vorganges den Wert FALSE. Außerdem wird, da das Signal Rvl deaktiviert ist, für das Signal ZFPvl der Wert FALSE ausgegeben. Die Möglichkeit der Deaktivierung des Signals Rvl ist in den Figuren 8a bzw. 8b nicht berücksichtigt. Ferner ist im Zeitdiagramm des Falles 3 angenommen, daß Block 202 ab dem Zeitpunkt t3 für das Signal Kr den Wert FALSE ausgibt, da das Signal Svl aktiv ist (Wert größer Null). Dies hat auf den Verlauf des Druckaufbaus keinen Einfluß, da das Signal Svl bis zu dem Zeitpunkt t4 einen Wert größer Null hat.

Im Fall 4 der Figur 11 sei angenommen, daß im Block 202 zum Zeitpunkt t1 ein Fahrzustand des Fahrzeuges erkannt wird, aufgrund dessen ein fahrerunabhängiger Bremseneingriff absehbar ist. Folglich gibt Block 202 ab dem Zeitpunkt t1 für das Signal Kr den Wert TRUE aus. Gleichzeitig weist Block 204 dem Signal FPvl den Wert TRUE zu. Ferner sei angenommen, daß ab dem Zeitpunkt t2 das Radkriterium für das linke Vorderrad erfüllt sei, weshalb das Signal Rvl ab diesem Zeitpunkt den Wert TRUE annimmt. Gleichzeitig gibt Block 204 ab dem Zeitpunkt t2 für das Signal FPvl den Wert FALSE und für das Signal ZFPvl den Wert TRUE aus. Dies führt, wie bereits beschrieben, zwischen den Zeitpunkten t1 und t2 zu einem stetigen Aufbau eines geringen Bremsdruckes. Ab dem Zeitpunkt t2 wird der Bremsdruck auf dem erreichten Wert konstant gehalten. Es sei ferner angenommen, daß der Regler 201 zwischen den Zeitpunkten t3 und t5 einen fahrerunabhängigen Bremseneingriff durchführen muß. Deshalb gibt er zwischen diesen Zeitpunkten für das Signal Svl einen entsprechenden Wert größer Null aus. Diese führt analog zum Fall 3 ab dem Zeitpunkt t3 zu einem verstärkten Bremsdruckaufbau im zugehörigen Radbremszylinder. Gleichzeitig wird zum Zeitpunkt t3 den Signalen Rvl bzw. ZFPvl jeweils der Wert FALSE zugewiesen. Das Signal Kr wird zum Zeitpunkt t4 von Block 202 auf den Wert FALSE gesetzt. Ab dem Zeitpunkt t5 ist kein fahrerunabhängiger Bremseneingriff mehr erforderlich, folglich weist Block 201 dem Signal Svl den Wert FALSE zu. Ab diesem Zeitpunkt wird der Bremsdruck im entsprechenden Radbremszylinder wieder abgebaut. Dieser Vorgang ist zum Zeitpunkt t6 beendet.

In Figur 12 ist der Zusammenhang zwischen den Signalen Avl, Aa, Ab sowie Ac, ausgehend von einem willkürlichen Verlauf des Signals Avl, dargestellt. In der Zeit zwischen t0 und t1 nimmt das Signal Avl einen Wert größer Null an. Folglich wird in diesem Zeitraum nur das Signal Ac generiert. Im Zeitraum, der durch die Zeiten t1 und t2 beschrieben ist, nimmt das Signal Avl den Wert Null. In diesem Zeitraum wird nur das Signal Aa generiert. Zwischen den Zeiten t2 und t3 nimmt das Signal Avl einen Wert kleiner Null. Folglich wird zwischen diesen Zeiten nur das Signal Ab generiert. Ab dem Zeitpunkt liegt der Fall vor, der zwischen den Zeitpunkten t1 und t2 vorgelegen hat.

### Zusammenstellung der in der Beschreibung verwendeten Signale

Nij: Von den Raddrehzahlsensoren 102ij erzeugte Signale, vorzugsweise periodisch, Frequenz ist Maß für die Radgeschwindigkeit.
vf: Signal, dessen Wert der Fahrzeuggeschwindigkeit entspricht.
delta: Signal, dessen Wert dem an den lenkbaren Rädern eingeschlagenen Lenkwinkel entspricht.
ayi (ayi') a/o omegai: Signal, dessen Wert dem Istwert der Querbeschleunigung und/oder dem der Gierwinkelgeschwindigkeit entspricht.
ays a/o omegas: Signal, dessen Wert dem Sollwert der Querbeschleunigung und/oder dem der Gierwinkelgeschwindigkeit entspricht.
Aij: Vorzugsweise pulsförmige Ansteuersignale zur Ansteuerung der Aktuatoren.
diffay a/o diffomega: Signal, dessen Wert der Regelabweichung der Querbeschleunigung und/oder der der Gierwinkelgeschwindigkeit entspricht.
Kr: Signal, das angibt, ob ein fahrerunabhängiger Bremseneingriff absehbar ist (TRUE).
Rij: Signal, das anzeigt, ob für das entsprechende Rad das Raddynamikkriterium erfüllt ist (TRUE).
tFPij: Signal, dessen Wert der Dauer der geringfügigen Betätigung der Aktuatoren des entsprechenden Rades entspricht.
Koij: Signal, mit dessem Wert die Signale zur Ansteuerung der Aktuatoren korrigiert werden.
FPij: Signal, das anzeigt ob für das zugehörige Rad eine geringfügige Betätigung der Aktuatoren erforderlich ist (TRUE).
ZFPij: Signal, das anzeigt, ob nach der geringfügigen Betätigung der entsprechenden Aktuatoren der erreichte Zustand dieser Aktuatoren beibehalten werden soll (TRUE).
Sij: Signal, dessen Wert anzeigt, ob und in welchem Umfang am zugehörigen Rad ein fahrerunabhängiger Bremseneingriff durchgeführt werden muß.
lambdaij: Signal, dessen Wert dem aktuellen Schlupf des zugehörigen Rades entspricht.
deltalambdasij: Signal, dessen Wert der Sollschlupfänderung entspricht.
vij: Signal, dessen Wert der Radgeschwindigkeit des zugehörigen Rades entspricht.
Rvij: Signal, das anzeigt, ob für das entsprechende Rad das auf der Radbeschleunigung und/oder Radverzögerung basierende Raddynamikkriterium erfüllt ist (TRUE).
Rlij: Signal, das anzeigt, ob für das entsprechende Rad das auf dem Radschlupf basierende Raddynamikkriterium erfüllt ist (TRUE).
Rij: Signal, das anzeigt, ob für das entsprechende Rad das Raddynamikkriterium erfüllt ist (TRUE).
Aa: Signal zum Ansteuern des Einlaßventils 1006a.
Ab: Signal zum Ansteuern des Auslaßventils 1006b.
Ac: Signal zum Ansteuern der Förderpumpe 1003.

## Patentansprüche

1. Vorrichtung zur Steuerung der Bremskraft an wenigstens einem Rad eines Fahrzeuges, welche
- erste Mittel (202) enthält, mit denen ein die Fahrzeugbewegung beschreibendes und/oder beeinflussendes Kriterium (Kr) ermittelt wird,
- zweite Mittel (203) enthält, mit denen eine die Raddynamik des zugehörigen Rades beschreibende Größe (Rij) ermittelt wird,
- dritte Mittel (201) enthält, mit denen wenigstens in Abhängigkeit des ermittelten Kriteriums festgestellt wird, ob ein fahrerunabhängiger Bremseneingriff an einem Rad absehbar ist,
**dadurch gekennzeichnet, daß** die Vorrichtung ferner
- vierte Mittel (204) enthält, mit denen bei Vorliegen der Erfordernis eines absehbaren fahrerunabhängigen Bremseneingriffes, zeitlich vor diesem absehbaren fahrerunabhängigen Bremseneingriff, eine geringfügige Betätigung variabler Dauer der dem Rad zugeordneten Aktuatoren vorgesehen ist,
- fünfte Mittel (204) enthält, mit denen die Dauer der geringfügigen Betätigung der Aktuatoren wenigstens in Abhängigkeit der die Raddynamik des zugehörigen Rades beschreibenden Größen (Rij) ermittelt wird.

2. Vorrichtung nach Anspruch 1, **dadurch gekennzeichnet, daß** das im ersten Mittel (202) gebildete, die Fahrzeugbewegung beschreibende und/oder beeinflussende Kriterium (Kr), wenigstens in Abhängigkeit der Abweichung eines Istwertes einer Fahrdynamikgröße (ayi, omegai) von einem für diese vorgegebenen Sollwert (ays, omegas) und/oder der zeitlichen Änderung dieser Abweichung (d(diffay)/dt, d(diffomega)/dt) gebildet wird.

3. Vorrichtung nach Anspruch 2, **dadurch gekennzeichnet, daß** als Fahrdynamikgröße die Giergeschwindigkeit des Fahrzeuges um seine Hochachse (omegai) und/oder die am Fahrzeug angreifende Querbeschleunigung (ayi) verwendet wird.

4. Vorrichtung nach Anspruch 2 und 3, **dadurch gekennzeichnet, daß** sowohl der Sollwert für die Giergeschwindigkeit (omegas) des Fahrzeuges um seine Hochachse als auch der Sollwert für die am Fahrzeug angreifende Querbeschleunigung (ays) wenigstens in Abhängigkeit der ermittelten Größen Lenkwinkel (delta) und/oder Fahrzeuglängsgeschwindigkeit (vf) ermittelt werden.

5. Vorrichtung nach Anspruch 1, **dadurch gekennzeichnet, daß** die die Raddynamik des zugehörigen Rades beschreibende Größe (Rij) wenigstens in Abhängigkeit der Radbeschleunigung (d(vvl)/dt,...) und/oder des Radschlupfes (lambdavl,...) gebildet wird.

6. Vorrichtung nach Anspruch 5, **dadurch gekennzeichnet, daß** zur Ermittlung der Radbeschleunigung (d(vvl)/dt,...) und/oder des Radschlupfes (lambdavl,...) die Raddrehzahl (Nvl,...) des Rades ermittelt wird.

7. Vorrichtung nach Anspruch 1, **dadurch gekennzeichnet, daß** die Erfordernis eines absehbaren fahrerunabhängigen Bremseneingriffes an einem Rad dann vorliegt, wenn die Abweichung des Istwertes der Fahrdynamikgröße (diffay, diffomega) von dem für diese vorgegebenen Sollwert über einem ersten Schwellwert (S1ay, S1omega) liegt und/oder die zeitliche Änderung dieser Abweichung (d/dt(diffay),...) über einem zweiten Schwellwert (S2ay, S2omega) liegt.

8. Vorrichtung nach Anspruch 1, **dadurch gekennzeichnet, daß** die geringfügige Betätigung variabler Dauer der dem Rad zugeordneten Aktuatoren dann beendet wird, wenn die die Raddynamik des zugehörigen Rades beschreibende Größe (Rvl) einen vorgegebenen Schwellwert erreicht.

9. Vorrichtung nach Anspruch 8, **dadurch gekennzeichnet, daß** der Schwellwert für die die Raddynamik des zugehörigen Rades beschreibende Größe so gewählt ist, daß nach Beendigung der Betätigung variabler Dauer der dem Rad zugeordneten Aktuatoren diese vorgespannt sind aber noch keine wesentliche Bremswirkung erzielen.

10. Vorrichtung nach Anspruch 1, **dadurch gekennzeichnet, daß** als dem Rad zugeordnete Aktuatoren (106vl,...) die in einer hydraulischen oder elektrohydraulischen Bremsanlage zur Aufbringung einer Bremskraft eingesetzten und diesem Rad zugeordneten Komponenten verwendet werden, wobei insbesondere durch die geringfügige Betätigung variabler Dauer dieser Aktuatoren, eben für diese variable Dauer Bremsflüssigkeit in den zugehörigen Radbremszylinder eingespeist und somit ein geringer Bremsdruck aufgebaut wird, dergestalt daß dadurch die Bremsbacken und/oder Bremsbeläge gerade anliegen, dabei aber noch keine wesentliche Bremswirkung erzielt wird.

11. Vorrichtung nach Anspruch 1, **dadurch gekennzeichnet, daß** als dem Rad zugeordnete Aktuatoren (106vl,...) die in einer pneumatischen oder elektropneumatischen Bremsanlage zur Aufbringung einer Bremskraft eingesetzten und diesem Rad zugeordneten Komponenten verwendet werden, wobei insbesondere durch die geringfügige Betätigung variabler Dauer dieser Aktuatoren, eben für diese variable Dauer Bremsmedium in den zugehörigen Radbremszylinder eingespeist und somit ein geringer Bremsdruck aufgebaut wird, dergestalt daß dadurch die Bremsbacken und/oder Bremsbeläge gerade anliegen, dabei aber noch keine wesentliche Bremswirkung erzielt wird.

12. Vorrichtung nach Anspruch 1, **dadurch gekennzeichnet, daß** als dem Rad zugeordnete Aktuatoren (106vl,...) die in einer elektro-mechanischen Bremsanlage zur Aufbringung einer Bremskraft eingesetzten und diesem Rad zugeordneten Komponenten verwendet werden, wobei insbesondere durch die geringfügige Betätigung variabler Dauer dieser Aktuatoren, eben für diese variable Dauer die Bremsbacken und/oder Bremsbeläge dergestalt bewegt werden, daß dadurch die Bremsbacken und/oder Bremsbeläge gerade anliegen, dabei aber noch keine wesentliche Bremswirkung erzielt wird.

13. Verfahren zur Steuerung der Bremskraft an wenigstens einem Rad eines Fahrzeuges, welches folgende Schritte umfaßt:
- Ermittlung eines die Fahrzeugbewegung beschreibenden und/oder beeinflussenden Kriteriums (Kr),
- Ermittlung einer die Raddynamik des zugehörigen Rades beschreibenden Größe (Rij),
- Ermittlung in Abhängigkeit des ermittelten Kriteriums, ob ein fahrerunabhängiger Bremseneingriff an einem Rad absehbar ist,
**dadurch gekennzeichnet, daß** das Verfahren ferner folgende Schritte umfaßt:
- geringfügige Betätigung variabler Dauer der dem Rad zugeordneten Aktuatoren, zeitlich vor dem absehbaren fahrerunabhängigen Bremseneingriff, bei Vorliegen der Erfordernis eines absehbaren fahrerunabhängigen Bremseneingriffes und
- Ermittlung der Dauer der geringfügigen Betätigung der Aktuatoren wenigstens in Abhängigkeit der die Raddynamik des zugehörigen Rades beschreibenden Größe.

## Claims

1. Device for controlling the braking force on at least one wheel of a vehicle, which
- contains first means (202) with which a criterion (Kr) which describes and/or influences the movement of the vehicle is determined,
- contains second means (203) with which a variable (Rij) which describes the wheel dynamics of the associated wheel is determined,
- contains third means (201) with which it is determined, at least as a function of the determined criterion, whether a driver-independent braking intervention can be predicted on a wheel,
**characterized in that** the device also
- contains fourth means (204) with which, given the request for a predictable driver-independent braking intervention, a slight activation of variable duration of the actuators assigned to the wheel is provided before this predictable driver-independent braking intervention,
- contains fifth means (204) with which the duration of the slight activation of the actuators is determined at least as a function of the variables (Rij) which describe the wheel dynamics of the associated wheel.

2. Device according to Claim 1, **characterized in that** the criterion (Kr) which is formed in the first means (202) and describes and/or influences the movement of the vehicle is formed at least as a function of the deviation of an actual value of a vehicle dynamics variable (ayi, omegai) from a set-point value (ays, omegas) which is predefined for the latter and/or the change of this deviation (d(diffay)/dt, d(diffomega)/dt) over time.

3. Device according to Claim 2, **characterized in that** the yaw rate of the vehicle about its vertical axis (omegai) and/or the lateral acceleration (ayi) which acts on the vehicle is/are used as the vehicle dynamics variable.

4. Device according to Claims 2 and 3, **characterized in that** both the set-point value for the yaw rate (omegas) of the vehicle about its vertical axis and the set-point value for the lateral acceleration (ays) which acts on the vehicle are determined at least as a function of the steering angle (delta) and/or the vehicle longitudinal speed variables (vf) determined.

5. Device according to Claim 1, **characterized in that** the variable (Rij) which describes the wheel dynamics of the associated wheel is formed at least as a function of the wheel acceleration (d(vvl)/dt,...) and/or of the wheel slip (lamdavl,...).

6. Device according to Claim 5, **characterized in that** the wheel speed (Nvl,...) of the wheel is determined in order to determine the wheel acceleration (d(vvl)/dt,...) and/or the wheel slip (lamdavl,...).

7. Device according to Claim 1, **characterized in that** the request for a predictable driver-independent braking intervention at a wheel is present if the deviation of the actual value of the vehicle dynamics variable (diffay, diffomega) from a set-point value predefined for said variable (diffay, diffomega) is above a first threshold value (S1ay, S1omega) and/or the change of this deviation (d/dt(diffay),...) over time is above a second threshold value (S2ay, S2omega).

8. Device according to Claim 1, **characterized in that** the slight activation of variable duration of the actuators which are assigned to the wheel is terminated if the variable (Rvl) which describes the wheel dynamics of the associated wheel reaches a predefined threshold value.

9. Device according to Claim 8, **characterized in that** the threshold value for the variable which describes the wheel dynamics of the associated wheel is selected such that, after the activation of variable duration of the actuators which are assigned to the wheel is terminated, said actuators are prestressed, but do not yet exert any significant braking effect.

10. Device according to Claim 1, **characterized in that** the components which are used for applying a braking force in a hydraulic or electrohydraulic braking system and are assigned to the wheel in question are employed as actuators (106 vL) assigned to said wheel, brake fluid being fed into the associated wheel brake cylinder in particular as a result of the slight activation of variable duration of these actuators, precisely for this variable duration, and a slight brake pressure thus being built up in such a way that as a result the brake blocks and/or brake linings are just applied, but no significant braking effect is yet exerted.

11. Device according to Claim 1, **characterized in that** the components which are used for applying a braking force in a pneumatic or electropneumatic braking system and are assigned to the wheel in question are used as actuators (106vl,...) assigned to said wheel, braking medium being fed into the associated wheel brake cylinder in particular as a result of the slight activation of variable duration of these actuators, precisely for this variable duration, and a slight brake pressure thus being built up in such a way that as a result the brake blocks and/or brake linings are just applied, but no significant braking effect is yet exerted.

12. Device according to Claim 1, **characterized in that** the components which are used for applying a braking force in an electromechanical braking system and are assigned to the wheel in question are used as actuators (106vl,...) assigned to said wheel, the brake blocks and/or brake linings being moved in particular as a result of the slight activation of variable duration of these actuators, precisely for this variable duration, in such a way that as a result the brake blocks and/or brake linings are just applied, but no significant braking effect is yet exerted.

13. Method for controlling the braking force on at least one wheel of a vehicle, which comprises the following steps:
- a criterion (Kr) which describes and/or influences the movement of the vehicle is determined,
- a variable (Rij) which describes the wheel dynamics of the associated wheel is determined,
- whether a driver-independent braking intervention can be predicted on a wheel is determined as a function of the determined criterion,
**characterized in that** the method also comprises the following steps:
- slight activation of variable duration of the actuators assigned to the wheel, before the predictable driver-independent braking intervention, given the request for a predictable driver-independent braking intervention, and
- determination of the duration of the slight activation of the actuators at least as a function of the variable which describes the wheel dynamics of the associated wheel.

## Revendications

1. Dispositif pour commander la force de freinage d'au moins une roue d'un véhicule, comprenant :
- des premiers moyens (202) à l'aide desquels on détermine un critère (Kr) influençant et/ou décrivant le mouvement du véhicule,
- des seconds moyens (203) à l'aide desquels on détermine une grandeur (Rij) qui décrit la dynamique de la roue correspondante,
- des troisièmes moyens (201) à l'aide desquels on détermine au moins en fonction du critère déterminé ci-dessus, si une intervention de freinage est envisagée sur la roue, indépendamment du conducteur,
**caractérisé en ce qu'**
il comprend en outre
- des quatrièmes moyens (204) à l'aide desquels, en cas de nécessité d'une intervention de frein, prévisible, indépendante du conducteur, il est prévu un actionnement léger de durée variable des actionneurs associés à la roue, avant cette intervention prévisible indépendante du conducteur, et
- des cinquièmes moyens (204) à l'aide desquels on détermine la durée de l'actionnement léger des actionneurs au moins en fonction de la grandeur (Rij) décrivant la dynamique de la roue correspondante.

2. Dispositif selon la revendication 1,
**caractérisé en ce que**
le critère (Kr) formé dans le premier moyen (202) influençant et/ou décrivant le mouvement du véhicule, est formé au moins en fonction de la déviation entre une valeur réelle d'une grandeur de la dynamique de roulement (ayi, ω i) par rapport à une valeur de consigne prédéterminée (ays, ω s) et/ou de la variation dans le temps de cette déviation (d (diffay)/dt, d(diff ω) /dt.

3. Dispositif selon la revendication 2,
**caractérisé en ce que**
comme grandeur de la dynamique de roulement, on utilise la vitesse de lacet du véhicule autour de son axe vertical (ω i) et/ou l'accélération transversale (ayi) appliquée au véhicule.

4. Dispositif selon les revendications 2 ou 3,
**caractérisé en ce qu'**
on détermine à la fois la valeur de consigne de la vitesse de lacet (ω s) du véhicule autour de son axe vertical ainsi que la valeur de consigne de l'accélération transversale (ays) appliquée au véhicule, au moins en fonction des grandeurs déterminées angle de braquage (Δ) et/ou vitesse longitudinale du véhicule (vf).

5. Dispositif selon la revendication 1,
**caractérisé en ce qu'**
on forme la grandeur (Rij) décrivant la dynamique de la roue correspondante au moins en fonction de l'accélération de roue (d (vvl)/dt,..)et/ou du patinage de roue (λ vl,...).

6. Dispositif selon la revendication 5,
**caractérisé en ce que**
pour déterminer l'accélération de roue (d(vvl)/dt,...) et/ou le patinage de roue (λ vl,...), on détermine la vitesse de rotation de roue (Nvl,...).

7. Dispositif pour commander la force de freinage d'au moins une roue d'un véhicule selon la revendication 1,
**caractérisé en ce que**
la nécessité d'une intervention de frein sur une roue, prévisible, indépendante du conducteur existe si la déviation entre la valeur réelle de la grandeur de la dynamique de roulement (diffay, diff ω) pour cette valeur de consigne prédéterminée dépasse un premier seuil (S1ay, S1 ω) et/ou si la variation dans le temps de cette déviation (d/dt(diffay...) dépasse un second seuil (S2ay, S2 ω).

8. Dispositif selon la revendication 1,
**caractérisé en ce que**
l'actionnement léger de durée variable des actionneurs associés à la roue se termine si la grandeur (Rvl) décrivant la dynamique de la roue correspondante atteint un seuil prédéterminé.

9. Dispositif selon la revendication 8,
**caractérisé en ce que**
la valeur de seuil de la grandeur décrivant la dynamique de la roue correspondante est choisie pour qu'à la fin de l'actionnement de durée variable des actionneurs associés à la roue qui sont précontraints, il n'y a néanmoins pas d'effet de freinage important.

10. Dispositif selon la revendication 1,
**caractérisé en ce que**
les actionneurs (106vl...) associés à la roue sont ceux appliquant une force de freinage d'un système de freins hydrauliques ou électro-hydrauliques et les composants associés à cette roue, et notamment par un léger actionnement de durée variable de ces actionneurs, précisément pour cette durée variable, on fournit du liquide de frein aux cylindres de freins de roue correspondants, et ainsi on établit une légère pression de freins de façon telle que les mâchoires de freins et/ou des garnitures de freins viennent juste en appui sans toutefois réaliser d'effet de freinage important.

11. Dispositif selon la revendication 1,
**caractérisé en ce que**
comme actionneur (106 vl...) associé à la roue, on utilise les composants d'une installation de freins pneumatiques ou électro-pneumatiques appliquant une force de frein et associés, à cette roue, et notamment par le léger actionnement de durée variable des actionneurs, on introduit, précisément pendant cette durée variable, du fluide de frein dans les cylindres de freins de roue associés et ainsi on établit une légère pression de frein de façon que les mâchoires de frein et/ou les garnitures de frein viennent juste en appui sans toutefois réaliser d'effet de freinage important.

12. Dispositif selon la revendication 1,
**caractérisé en ce que**
comme actionneur (106vl,...) associé à la roue, on utilise les composants faisant partie d'une installation de freins électromécaniques pour appliquer une forme de freinage et qui sont associés à cette roue, et notamment par ce léger actionnement de durée variable des actionneurs, on déplace pour cette durée variable, les mâchoires de frein et/ou les garnitures de frein pour que les mâchoires de frein et/ou les garnitures de frein restent juste en appui mais n'appliquent pas encore d'effet de freinage important.

13. Procédé de commande de la force de frein d'au moins une roue d'un véhicule, comprenant les étapes suivantes :
- on détermine un critère (Kr) influençant ou décrivant le mouvement du véhicule,
- on détermine une grandeur (Rij) décrivant la dynamique de la roue correspondante,
- on détermine, en fonction du critère obtenu, si une intervention de frein indépendante du conducteur est prévisible pour une roue,
**caractérisé en ce que**
le procédé comprend les étapes suivantes :
- léger actionnement de durée variable des actionneurs associés à la roue, dans le temps avant l'intervention de freins prévisible, indépendante du conducteur, en cas de nécessité d'une intervention prévisible des freins, indépendante du conducteur, et
- détermination de la durée de l'actionnement léger des actionneurs au moins en fonction de la grandeur décrivant la dynamique de la roue correspondante.
